# EUROPEAN PATENT APPLICATION

(11) **EP 4 761 319 A1**
(43) Date of publication of application: **17.06.2026**
(21) Application number: 23948140.1
(22) Date of filing: 10.08.2023
(51) Int. Cl.: H04W 24/02

(54) **COMMUNICATION METHOD, TERMINAL, NETWORK DEVICE, AND STORAGE MEDIUM**

(71) Applicant: Beijing Xiaomi Mobile Software Co., Ltd., Beijing 100085 (CN)
(72) Inventor: HU, Ziquan, Beijing 100085 (CN); TAO, Xuhua, Beijing 100085 (CN)
(74) Representative: Dehns Germany Partnerschaft mbB
(86) International application number: PCT/CN2023/112411
(87) International publication number: WO 2025/030570

(57) **Abstract**

The present disclosure relates to a communication method, a terminal, a network device, and a storage medium. The communication method is executed by a terminal, and comprises: supporting simultaneous execution of K measurements that are not based on a measurement gap (MG), wherein each measurement comprises a measurement of at least one type of measurement object, and K is an integer not less than 2. **In** the embodiment, the terminal supports simultaneous measurement of K measurements that are not based on the MG, breaking the limitation of the terminal simultaneously measuring a single type of measurement object; additionally, a plurality of measurements are executed simultaneously, reducing the measurement time delay, and improving the measurement efficiency.

## Description

### TECHNICAL FIELD

The present disclosure relates to a field of communication technologies, and in particular to a communication method, a terminal, a network device, and a storage medium.

### BACKGROUND

With the rapid development of mobile communication technologies, a network device may configure measurement configurations for a terminal, and the terminal performs measurements based on the measurement configuration. Specifically, the measurement configuration includes a plurality of measurement objects, and the terminal may measure each measurement object to obtain a measurement result of each measurement object.

### SUMMARY

The present disclosure solves the problem that a terminal cannot simultaneously measure a plurality of measurement objects, ensures that the terminal simultaneously measures a plurality of measurement objects, reduces measurement delay, expands measurement performance of the terminal, and thereby ensures communication reliability.

Embodiments of the present disclosure propose a communication method, a terminal, a network device, and a storage medium.

According to a first aspect of the embodiments of the present disclosure, a communication method is provided, the method includes:
supporting, by a terminal, simultaneous execution of K measurements that are not based on a measurement gap MG, where each measurement includes measurement of at least one type of a measurement object, where K is an integer no less than 2.

According to a second aspect of the embodiments of the present disclosure, a communication method is provided, the method includes:
determining that a terminal supports simultaneous execution of K measurements that are not based on a measurement gap MG, where each measurement includes measurement of at least one type of a measurement object, where K is an integer no less than 2.

According to a third aspect of the embodiments of the present disclosure, a communication method is provided, the method includes:
supporting, by a terminal, simultaneous execution of K measurements that are not based on a measurement gap MG, where each measurement includes measurement of at least one type of a measurement object, where K is an integer no less than 2; and
determining, by a network device, that the terminal supports the simultaneous execution of K measurements that are not based on a measurement gap MG.

According to a fourth aspect of the embodiments of the present disclosure, a terminal is provided, and includes:
a processing module, configured to support simultaneous execution of K measurements that are not based on a measurement gap MG, where each measurement includes measurement of at least one type of a measurement object, where K is an integer no less than 2.

According to a fifth aspect of the embodiments of the present disclosure, a network device is provided, and includes:
a processing module, configured to determine that a terminal supports simultaneous execution of K measurements that are not based on a measurement gap MG, where each measurement includes measurement of at least one type of a measurement object, where K is an integer no less than 2.

According to a sixth aspect of the embodiments of the present disclosure, a terminal is provided, and includes:
one or more processors;
where the terminal is configured to execute any one of the methods in the first aspect.

According to a seventh aspect of the embodiments of the present disclosure, a network device is provided, and includes:
one or more processors;
where the terminal is configured to execute any one of the methods in the second aspect.

According to an eighth aspect of the embodiments of the present disclosure, a communication system is provided, and includes:
a terminal and a network device, where the terminal is configured to implement the communication method according to the first aspect, and the network device is configured to implement the communication method according to the second aspect.

According to a ninth aspect of the embodiments of the present disclosure, a storage medium is provided, the storage medium storing instructions, and when the instructions are executed on a communication device, the communication device executes the method according to any one of the first aspect or the second aspect.

### BRIEF DESCRIPTION OF THE DRAWINGS

The accompanying drawings described herein are provided to facilitate further understanding of the embodiments of the present disclosure and constitute a part of the present disclosure. The schematic embodiments of the present disclosure and descriptions thereof are used to explain the embodiments of the present disclosure and do not constitute any improper limitation on the embodiments of the present disclosure. In the drawings:
FIG. 1 is a schematic diagram of an architecture of a communication system according to an embodiment of the present disclosure;
FIG. 2 is a schematic interaction diagram of a communication method according to an embodiment of the present disclosure;
FIG. 3A is a schematic flowchart of a communication method according to an embodiment of the present disclosure;
FIG. 3B is a schematic flowchart of a communication method according to an embodiment of the present disclosure;
FIG. 4A is a schematic flowchart of a communication method according to an embodiment of the present disclosure;
FIG. 4B is a schematic flowchart of a communication method according to an embodiment of the present disclosure;
FIG. 5 is a schematic flowchart of a communication method according to an embodiment of the present disclosure;
FIG. 6 is a schematic flowchart of a communication method according to an embodiment of the present disclosure;
FIG. 7A is a schematic structural diagram of a terminal proposed in an embodiment of the present disclosure;
FIG. 7B is a schematic structural diagram of a network device proposed in an embodiment of the present disclosure;
FIG. 8A is a schematic structural diagram of a communication device proposed in an embodiment of the present disclosure;
FIG. 8B is a schematic structural diagram of a chip proposed in an embodiment of the present disclosure.

### DETAILED DESCRIPTION

The present disclosure provides a communication method, a terminal, and a storage medium.

In a first aspect, an embodiment of the present disclosure provides a communication method, the method includes:
supporting simultaneous execution of K measurements that are not based on a measurement gap MG, where each measurement includes measurement of at least one type of a measurement object, and K is an integer no less than 2.

In the above embodiment, the terminal supports simultaneously measuring K measurements that are not based on the MG, which breaks a limitation that the terminal may only simultaneously measure a single type of measurement object. Moreover, by simultaneously performing a plurality of measurements, measurement delay is reduced and measurement efficiency is improved.

In combination with some embodiments of the first aspect, in some embodiments, the type of the measurement object includes at least one of:
a PCC (Primary Carrier Component) of FR1 (Frequency Range 1);
a PCC of FR2 (Frequency Range 2);
a PSCC (Primary Secondary Carrier Component) of FR1;
a PSCC of FR2;
an FR2 SCC (Secondary Carrier Component) requiring neighbor cell measurement;
an FR1 SCC;
an FR2 SCC without requiring neighbor cell measurement;
an inter-frequency MO (Measurement Object) without requiring an MG (Measurement Gap);
an inter-system MO without requiring an MG.

In the above embodiments, the terminal supports measuring a plurality of types of measurement objects, thereby ensuring diversity of measurement objects and improving the measurement capability of the terminal.

In combination with some embodiments of the first aspect, in some embodiments, a scaling factor of a first measurement object is determined according to a communication scenario where the terminal is currently located and a first type of the first measurement object, where the scaling factor is configured to determine a delay of measurement for the first measurement object; where the first measurement object is one or more of a plurality of measurement objects configured by a network device for the terminal.

In the above embodiments, the terminal may determine the scaling factor according to the current communication scenario and the first type of the first measurement object, and enlarge the delay of measurement for the first measurement object by means of the scaling factor, such that the terminal may determine a final measurement delay merely by extending the delay of the first measurement object, thereby reducing the measurement delay for measuring the measurement object and improving measurement efficiency.

In combination with some embodiments of the first aspect, in some embodiments, determining the scaling factor of the first measurement object according to the communication scenario where the terminal is currently located and the first type of the first measurement object includes:
determining the scaling factor of the first measurement object according to the communication scenario where the terminal is currently located and a priority of the first type.

In the above embodiments, determining the scaling factor according to the priority of the first type is added, so as to ensure accuracy of the determined scaling factor, and thereby ensure accuracy of the determined measurement delay.

In combination with some embodiments of the first aspect, in some embodiments, determining the scaling factor of the first measurement object according to the communication scenario where the terminal is currently located and the first type of the first measurement object includes:
when the priority of the first type is higher than a priority of a second type, determining the scaling factor of the first measurement object as 1;
when the priority of the first type is lower than a priority of a second type, determining the scaling factor of the first measurement object according to a number of measurement objects of each second type;
where the second type is a type of another measurement object, other than the measurement object of the first type, configured by the network device for the terminal in the current communication scenario.

In the above embodiments, the scaling factor is determined according to a level of the priority of the first type, so as to ensure accuracy of the determined scaling factor, and thereby ensure accuracy of the determined measurement delay.

In combination with some embodiments of the first aspect, in some embodiments, determining the scaling factor of the first measurement object according to the communication scenario where the terminal is currently located and the first type of the first measurement object includes:
determining the scaling factor of the first measurement object according to the communication scenario where the terminal is currently located, a priority coefficient of the first type, and K.

In the above embodiments, determining the scaling factor according to the priority coefficient of the first type is added, so as to ensure accuracy of the determined scaling factor, and thereby ensure accuracy of the determined measurement delay.

In combination with some embodiments of the first aspect, in some embodiments, determining the scaling factor of the first measurement object according to the communication scenario where the terminal is currently located, the priority coefficient of the first type, and K includes:
when the priority of the first type is higher than a priority of a second type, determining the scaling factor of the first measurement object as 1;
when the priority of the first type is lower than the priority of the second type, determining the scaling factor of the first measurement object according to a number of measurement objects of each second type, the priority coefficient of the first type, and K;
where the second type is a type of another measurement object, other than the measurement object of the first type, configured by the network device for the terminal in the current communication scenario.

In the above embodiments, the scaling factor is determined according to a level of the priority of the first type, so as to ensure accuracy of the determined scaling factor, and thereby ensure accuracy of the determined measurement delay.

In combination with some embodiments of the first aspect, in some embodiments, each second type corresponds to one or a plurality of priority coefficients.

In combination with some embodiments of the first aspect, in some embodiments, the method further includes:
determining the scaling factor of the first measurement object according to a first type to which the first measurement object belongs, a number of measurement objects included in the first type, and K, where the scaling factor is configured to enlarge a delay of measurement for the first measurement object.

In the above embodiments, the terminal may determine the scaling factor according to the type to which a measurement object belongs, the number of measurement objects, and the number of types of measurement objects that the terminal supports to be measured simultaneously. By using the scaling factor to extend the measurement delay for the first measurement object, it is ensured that the terminal may determine the final measurement delay by extending the delay of the first measurement object, thereby reducing the measurement delay for measuring the measurement objects and improving measurement efficiency.

In combination with some embodiments of the first aspect, in some embodiments, determining the scaling factor of the first measurement object according to the first type to which the first measurement object belongs, the number of measurement objects included in the first type, and K includes:
sorting types to which configured measurement objects belong according to priorities of the types to which the configured measurement objects belong, to obtain a sorting result of the first type;
determining, according to the sorting result, a first quantity of measurement objects included in types having a same priority as the first type;
determining the scaling factor of the first measurement object according to the type to which the first measurement object belongs, the first quantity, and K.

In the above embodiments, types to which measurement objects belong are sorted according to the priorities of the types to which the measurement objects belong, so as to obtain a plurality of groups, and then a measurement manner of the terminal is determined according to the groups, thereby ensuring accuracy of the scaling factor determined according to the groups, and further ensuring accuracy of extending the measurement delay by using the scaling factor, reducing the measurement delay for measuring the measurement objects, and improving measurement efficiency.

In combination with some embodiments of the first aspect, in some embodiments, a type to which a measurement object belongs corresponds to a priority coefficient, and the priority coefficient is used to indicate a priority of the type to which the measurement object belongs; determining the scaling factor of the first measurement object according to the type to which the first measurement object belongs, the first quantity, and K includes:
determining the scaling factor of the first measurement object according to the priority coefficient corresponding to the type to which the first measurement object belongs, the type to which the first measurement object belongs, the first quantity, and K.

In the above embodiments, a concept of the priority coefficient is proposed, and the scaling factor is determined through the priority coefficient, so as to ensure accuracy of the determined scaling factor, thereby further ensuring accuracy of extending the measurement delay by using the scaling factor, reducing the measurement delay for measuring the measurement object, and improving the measurement efficiency.

In combination with some embodiments of the first aspect, in some embodiments, determining, according to the sorting result, the first quantity of measurement objects included in types having the same priority as the first type includes:
determining, according to the sorting result, measurement objects of a type having a highest priority as one group;
dividing, for measurement objects of all other types other than the measurement objects of the type having the highest priority, the measurement objects into K-1 groups according to priority coefficients corresponding to the other types of measurement objects;
determining the first quantity according to a number of measurement objects included in each type included in the obtained groups.

In the above embodiments, types to which measurement objects belong are sorted according to priorities of the types to which the measurement objects belong, so as to obtain a plurality of groups, and then a measurement manner of the terminal is determined according to the groups, thereby ensuring accuracy of the scaling factor determined according to the groups, and further ensuring accuracy of extending the measurement delay by using the scaling factor, reducing the measurement delay for measuring the measurement objects, and improving measurement efficiency.

In combination with some embodiments of the first aspect, in some embodiments, determining, according to the sorting result, the first quantity of measurement objects included in types having the same priority as the first type includes:
determining, according to the sorting result, measurement objects of a type having a highest priority as one group;
determining measurement objects of all other types, other than the measurement objects of the type having the highest priority, as another group;
determining the first quantity according to a number of measurement objects included in each type included in the obtained groups.

In the above embodiments, types to which measurement objects belong are sorted according to priorities of the types to which the measurement objects belong, so as to obtain a plurality of groups, and then a measurement manner of the terminal is determined according to the groups, thereby ensuring accuracy of the scaling factor determined according to the groups, and further ensuring accuracy of extending the measurement delay by using the scaling factor, reducing the measurement delay for measuring the measurement objects, and improving measurement efficiency.

In combination with some embodiments of the first aspect, in some embodiments, determining the scaling factor of the first measurement object according to the first type to which the first measurement object belongs, the number of measurement objects included in the first type, and K includes:
determining the scaling factor of the first measurement object according to a communication scenario supported by the terminal, the first type to which the first measurement object belongs, the number of measurement objects included in the first type, and K.

In the above embodiments, the terminal supports different communication scenarios, and for different communication scenarios the terminal adopts different manners to determine the scaling factor, and therefore the scaling factor is determined according to the communication scenario supported by the terminal, so as to ensure accuracy of the determined scaling factor, and thereby ensure accuracy of extending the measurement delay by using the scaling factor, reducing the measurement delay for measuring the measurement object, and improving measurement efficiency.

In combination with some embodiments of the first aspect, in some embodiments, the communication scenario includes at least one of:
an EN-DC (E-UTRAN New Radio Dual Connectivity, LTE and 5G Dual Connectivity) scenario;
an SA (Standalone) scenario;
an NR-DC (New Radio-Dual Connectivity) scenario; or
an NE-DC (NR-E-UTRA Dual Connectivity, 5G and LTE Dual Connectivity) scenario.

In combination with some embodiments of the first aspect, in some embodiments, the EN-DC scenario includes at least one of:
an ENDC scenario with only FR1 CA (Carrier Aggregation);
an ENDC scenario with only FR2 intra-band CA;
an ENDC scenario with only FR2 inter-band CA;
an ENDC scenario with FR1+FR2 CA, and a PSCell in FR1; or
an ENDC scenario with FR1+FR2 CA, and a PSCell in FR2.

In combination with some embodiments of the first aspect, in some embodiments, the SA scenario includes at least one of:
an SA scenario with only FR1 CA;
an SA scenario with only FR2 intra-band CA;
an SA scenario with only FR2 inter-band CA;
an SA scenario with FR1+FR2 CA, and a PCell in FR1; or
an SA scenario with FR1+FR2 CA, and a PCell in FR2.

In combination with some embodiments of the first aspect, in some embodiments, the NR-DC scenario includes: an NR-DC scenario with a PCell in FR1 and a PSCell in FR2.

In combination with some embodiments of the first aspect, in some embodiments, the NE-DC scenario includes at least one of:
NE-DC with only FR1 CA;
NE-DC with only FR2 intra-band CA;
NE-DC with only FR2 inter-band CA; or
NE-DC with FR1 and FR2 CA, and a PCell in FR1.

In combination with some embodiments of the first aspect, in some embodiments, measurement of the K types of measurement objects is used for layer 3 mobility management or layer 1 mobility management.

In a second aspect, an embodiment of the present disclosure provides a communication method, the method is performed by a network device, and the method includes:
determining that a terminal supports simultaneous execution of K measurements that are not based on a measurement gap MG, where each measurement includes measurement of at least one type of a measurement object, where K is an integer no less than 2.

In combination with some embodiments of the first aspect, in some embodiments, the type of the measurement object includes at least one of:
a PCC of FR1;
a PCC of FR2;
a PSCC of FR1;
a PSCC of FR2;
an FR2 SCC requiring neighbor cell measurement;
an FR1 SCC;
an FR2 SCC without requiring neighbor cell measurement;
an inter-frequency MO without requiring an MG; or
an inter-system MO without requiring an MG.

In combination with some embodiments of the first aspect, in some embodiments, a scaling factor of a first measurement object is determined according to a communication scenario where the terminal is currently located and a first type of the first measurement object, where the scaling factor is configured to determine a delay of measurement for the first measurement object; where the first measurement object is one or more of a plurality of measurement objects configured by the network device for the terminal.

In combination with some embodiments of the first aspect, in some embodiments, the scaling factor of the first measurement object is determined according to the communication scenario where the terminal is currently located and a priority of the first type.

In combination with some embodiments of the first aspect, in some embodiments, when the priority of the first type is higher than a priority of a second type, the scaling factor of the first measurement object is 1;
when the priority of the first type is lower than the priority of the second type, the scaling factor of the first measurement object is determined according to a number of measurement objects of each second type;
where the second type is a type of another measurement object, other than the measurement objects of the first type, configured by the network device for the terminal in the current communication scenario.

In combination with some embodiments of the first aspect, in some embodiments, the scaling factor of the first measurement object is determined according to the communication scenario where the terminal is currently located, a priority coefficient of the first type, and K.

In combination with some embodiments of the first aspect, in some embodiments, when the priority of the first type is higher than a priority of a second type, the scaling factor of the first measurement object is 1;
when the priority of the first type is lower than the priority of the second type, the scaling factor of the first measurement object is determined according to a number of measurement objects of each second type, the priority coefficient of the first type, and K;
where the second type is another measurement object, other than the measurement object of the first type, configured by the network device for the terminal in the current communication scenario.

In combination with some embodiments of the first aspect, in some embodiments, each second type corresponds to one or a plurality of priority coefficients.

In combination with some embodiments of the first aspect, in some embodiments, the scaling factor of the first measurement object is determined according to the first type to which the first measurement object belongs, the number of measurement objects included in the first type, and K, and the scaling factor is configured to enlarge a delay of measurement for the first measurement object.

In combination with some embodiments of the first aspect, in some embodiments, the scaling factor of the first measurement object is determined according to the type to which the first measurement object belongs, a first quantity, and K, where the first quantity refers to a number of measurement objects included in types having the same priority as the first type, as determined according to the sorting result, and the sorting result is obtained by sorting types to which configured measurement objects belong according to priorities of the types to which the configured measurement objects belong.

In combination with some embodiments of the first aspect, in some embodiments, the scaling factor of the first measurement object is determined according to a priority coefficient corresponding to the type to which the first measurement object belongs, the type to which the first measurement object belongs, the first quantity, and K.

In combination with some embodiments of the first aspect, in some embodiments, determining, according to the sorting result, the first quantity of measurement objects included in types having the same priority as the first type includes:
the first quantity being determined according to a number of measurement objects included in each type included in obtained groups, where measurement objects of a type having a highest priority in the sorting result are taken as one group; and for the measurement objects of all other types other than the measurement objects of the type having the highest priority, the measurement objects being divided into K-1 groups according to priority coefficients corresponding to the other types of measurement objects.

In combination with some embodiments of the first aspect, in some embodiments, the first quantity is determined according to a number of measurement objects included in each type included in obtained groups, where measurement objects of a type having a highest priority in the sorting result are taken as one group, and measurement objects of all other types, other than the measurement objects of the type having the highest priority, are taken as another group.

In combination with some embodiments of the first aspect, in some embodiments, determining the scaling factor of the first measurement object according to the first type to which the first measurement object belongs, the number of measurement objects included in the first type, and K includes:
determining the scaling factor of the first measurement object according to a communication scenario supported by the terminal, the first type to which the first measurement object belongs, a number of measurement objects included in the first type, and K.

In combination with some embodiments of the first aspect, in some embodiments, the communication scenario includes at least one of:
an EN-DC scenario;
an SA scenario;
an NR-DC scenario; or
an NE-DC scenario.

In combination with some embodiments of the first aspect, in some embodiments, the EN-DC scenario includes at least one of:
an ENDC scenario with only FR1 CA;
an ENDC scenario with only FR2 intra-band CA;
an ENDC scenario with only FR2 inter-band CA;
an ENDC scenario with FR1+FR2 CA, and a PSCell in FR1; or
an ENDC scenario with FR1+FR2 CA, and a PSCell in FR2.

In combination with some embodiments of the first aspect, in some embodiments, the SA scenario includes at least one of:
an SA scenario with only FR1 CA;
an SA scenario with only FR2 intra-band CA;
an SA scenario with only FR2 inter-band CA;
an SA scenario with FR1+FR2 CA, and a PCell in FR1; or
an SA scenario with FR1+FR2 CA, and a PCell in FR2.

In combination with some embodiments of the first aspect, in some embodiments, the NR-DC scenario includes: an NR-DC scenario with a PCell in FR1 and a PSCell in FR2.

In combination with some embodiments of the first aspect, in some embodiments, the NE-DC scenario includes at least one of:
NE-DC with only FR1 CA;
NE-DC with only FR2 intra-band CA;
NE-DC with only FR2 inter-band CA; or
NE-DC with FR1 and FR2 CA, and a PCell in FR1.

In combination with some embodiments of the first aspect, in some embodiments, measurement of the K types of measurement objects is configured for layer 3 mobility management or layer 1 mobility management.

In a third aspect, an embodiment of the present disclosure provides a communication method, the method includes:
supporting, by a terminal, simultaneously measuring K types of measurement objects, where the measurement objects are measured not based on a measurement gap, and K is a positive integer no less than 2; and
determining, by a network device, that the terminal supports simultaneously measuring the K types of measurement objects.

In a fourth aspect, an embodiment of the present disclosure provides a terminal, where the terminal includes at least one of a transceiver module or a processing module; where the terminal is configured to execute optional implementations of the first aspect and the third aspect.

In a fifth aspect, an embodiment of the present disclosure provides a network device, where the access network device includes at least one of a transceiver module or a processing module; where the access network device is configured to execute optional implementations of the second aspect and the third aspect.

In a sixth aspect, an embodiment of the present disclosure provides a terminal, and the terminal includes:
one or more processors;
where the terminal is configured to execute any one of the methods according to the first aspect and the third aspect.

In a seventh aspect, an embodiment of the present disclosure provides a network device, and the network device includes:
one or more processors;
where the network device is configured to execute any one of the methods according to the second aspect and the third aspect.

In an eighth aspect, an embodiment of the present disclosure provides a storage medium, the storage medium storing first information, and when the first information is executed on a communication device, the communication device is caused to execute any one of the methods according to the first aspect, the second aspect, and the third aspect.

In a ninth aspect, an embodiment of the present disclosure provides a program product, and when the program product is executed by a communication device, the communication device is caused to execute any one of the methods according to the first aspect, the second aspect, and the third aspect.

In a tenth aspect, an embodiment of the present disclosure provides a computer program, and when the computer program is executed on a communication device, the communication device is caused to execute any one of the methods according to the first aspect, the second aspect, and the third aspect.

In an eleventh aspect, an embodiment of the present disclosure provides a chip or a chip system. The chip or chip system includes a processing circuit configured to execute any one of the methods according to the first aspect, the second aspect, and the third aspect.

It may be understood that the above terminal, storage medium, program product, computer program, chip, or chip system are all used to execute the methods proposed in the embodiments of the present disclosure. Therefore, beneficial effects that may be achieved thereby may refer to the beneficial effects in the corresponding methods, and details are not repeated herein.

The embodiments of the present disclosure propose a communication method, a terminal, a network device, and a storage medium. In some embodiments, terms such as communication method, information processing method, and indication method may be used interchangeably, terms such as communication device, information processing device, and indication device may be used interchangeably, and terms such as information processing system and communication system may be used interchangeably.

The embodiments of the present disclosure are not exhaustive, but merely illustrative of some embodiments, and shall not serve as specific limitations on the protection scope of the present disclosure. In the case of no contradiction, each step in a certain embodiment may be implemented as an independent embodiment, and the steps may be arbitrarily combined. For example, a solution with some steps removed from a certain embodiment may also be implemented as an independent embodiment, and the order of each step in a certain embodiment may be arbitrarily exchanged. In addition, the optional implementations in a certain embodiment may be arbitrarily combined. Furthermore, the various embodiments may be arbitrarily combined. For example, some or all steps of different embodiments may be arbitrarily combined, and a certain embodiment may be arbitrarily combined with optional implementations of other embodiments.

In each embodiment of the present disclosure, unless otherwise specified and there is no logical conflict, the terms and/or descriptions between the various embodiments are consistent and may be cross-referenced, and the technical features in different embodiments may be combined to form new embodiments according to their inherent logical relationships.

The terms used in the embodiments of the present disclosure are only for the purpose of describing specific embodiments and are not intended to limit the present disclosure.

In the embodiments of the present disclosure, unless otherwise stated, elements expressed in singular form, such as "a", "an", "the", "the above", "said", "the aforementioned", "this", etc., may mean "one and only one", or may mean "one or more", "at least one", etc. For example, when articles such as "a", "an", "the" in English are used in the translation, the noun following the article may be understood as a singular expression or a plural expression.

In the embodiments of the present disclosure, "a plurality of" means two or more.

In some embodiments, terms such as "at least one (at least one item, at least one of)", "one or more", "a plurality of", "multiple" may be mutually substituted.

In some embodiments, recording manners such as "at least one of A and B", "A and/or B", "A in one case, B in another case", "in response to one case A, in response to another case B" may include the following technical solutions according to circumstances: A in some embodiments (executing A independently of B); B in some embodiments (executing B independently of A); selecting and executing from A and B in some embodiments (A and B are selectively executed); A and B in some embodiments (both A and B are executed). The same applies when there are more branches such as A, B, and C.

In some embodiments, recording manners such as "A or B" may include the following technical solutions according to circumstances: A in some embodiments (executing A independently of B); B in some embodiments (executing B independently of A); selecting and executing from A and B in some embodiments (A and B are selectively executed). The same applies when there are more branches such as A, B, and C.

The prefixes such as "first" and "second" in the embodiments of the present disclosure are only used to distinguish different described objects, and do not constitute limitations on the position, order, priority, quantity, or content of the described objects. The statement of the described objects refers to the description in the context of the claims or embodiments, and shall not constitute redundant limitations due to the use of prefixes. For example, if the described object is a "field", the ordinal numbers before "field" in "first field" and "second field" do not limit the position or order between the "fields", and "first" and "second" do not limit whether the "fields" modified by them are in the same message, nor do they limit the order of "first field" and "second field". For another example, if the described object is a "level", the ordinal numbers before "level" in "first level" and "second level" do not limit the priority between the "levels". For another example, the quantity of the described object is not limited by the ordinal number, and may be one or more; taking "first apparatus" as an example, the quantity of "apparatus" may be one or more. In addition, objects modified by different prefixes may be the same or different. For example, if the described object is an "apparatus", the "first apparatus" and the "second apparatus" may be the same apparatus or different apparatus, and their types may be the same or different; for another example, if the described object is "information", "first information" and "second information" may be the same information or different information, and their contents may be the same or different.

In some embodiments, "including A", "containing A", "for indicating A", and "carrying A" may be interpreted as directly carrying A or indirectly indicating A.

In some embodiments, terms such as "time/frequency" and "time-frequency domain" refer to a time domain and/or a frequency domain.

In some embodiments, terms such as "in response to...", "in response to determining... ", "in the case of...", "when...", "at the time of...", "if...", "in the event that..." may be mutually substituted.

In some embodiments, terms such as "greater than", "greater than or equal to", "not less than", "more than", "more than or equal to", "no less than", "higher than", "higher than or equal to", "not lower than", "above" may be mutually substituted. Terms such as "less than", "less than or equal to", "not greater than", "fewer than", "fewer than or equal to", "no more than", "lower than", "lower than or equal to", "not higher than", "below" may be mutually substituted.

In some embodiments, the apparatus and device may be interpreted as physical or virtual, and their names are not limited to the names recorded in the embodiments. In some cases, they may also be understood as "equipment", "device", "circuit", "network element", "node", "function", "unit", "section", "system", "network", "chip", "chip system", "entity", "subject", etc.

In some embodiments, the "network" may be interpreted as the apparatus included in the network, such as the access network device, the core network device, etc.

In some embodiments, an "access network device (AN device)" may also be referred to as a "radio access network device (RAN device)", a "base station (BS)", a "radio base station", or a "fixed station". In some embodiments, it may also be understood as a "node", an "access point", a "transmission point (TP)", a "reception point (RP)", a "transmission and/or reception point (TRP)", a "panel", an "antenna panel", an "antenna array", a "cell", a "macro cell", a "small cell", a "femto cell", a "pico cell", a "sector", a "cell group", a "serving cell", a "carrier", a "component carrier", or a "bandwidth part (BWP)", etc.

In some embodiments, a "terminal" or "terminal device" may be referred to as a "user equipment (terminal)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, wireless terminal, remote terminal, handset, user agent, mobile client, client, etc.

In some embodiments, the acquisition of data, information, etc., may comply with the laws and regulations of the country where the location is situated.

In some embodiments, data, information, etc., may be obtained with the user's consent.

In addition, each element, each row, or each column in the tables of the embodiments of the present disclosure may be implemented as an independent embodiment, and any combination of any elements, any rows, or any columns may also be implemented as an independent embodiment.

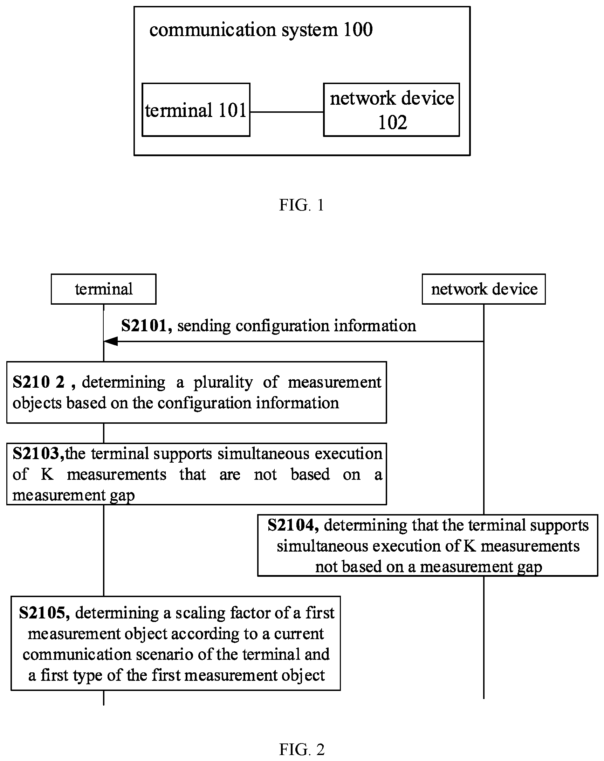

FIG. 1 is a schematic architectural diagram of a communication system shown according to embodiments of the present disclosure. As shown in FIG. 1, the method provided in the embodiments of the present disclosure may be applied to a communication system 100. The communication system may include a terminal 101 and a network device 102. It should be noted that the communication system 100 may further include other devices, and the present disclosure does not limit the devices included in the communication system 100.

In some embodiments, the terminal 101 includes, for example, at least one of a mobile phone, a wearable device, an Internet of Things (IoT) device, a vehicle with communication functions, an intelligent vehicle, a tablet computer (Pad), a computer with wireless transceiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the network device 102 may include at least one of an access network device or a core network device.

In some embodiments, the access network device is, for example, a node or a device for connecting a terminal to a wireless network. The access network device 102 is, for example, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an Open Radio Access Network (Open RAN), a Cloud Radio Access Network (Cloud RAN), a base station in other communication systems, and an access node in a Wi-Fi system, but is not limited thereto.

In some embodiments, the technical solutions of the present disclosure may be applicable to the Open RAN architecture. In this case, the interfaces between access network devices or within an access network device involved in the embodiments of the present disclosure may become internal interfaces of the Open RAN, and the processes and information interaction between these internal interfaces may be implemented through software or programs.

In some embodiments, the access network device may be composed of a central unit (CU) and a distributed unit (DU), where the CU may also be referred to as a control unit. The CU-DU structure may split the protocol layers of the access network device, place the functions of some protocol layers under centralized control of the CU, and distribute the functions of the remaining part or all of the protocol layers in the DU, with the CU centrally controlling the DU, but is not limited thereto.

In some embodiments, the core network device may be a single device including one or more network elements, or may be a plurality of devices or a group of devices respectively including all or part of the one or more network elements described above. The network elements may be virtual or physical. The core network, for example, includes at least one of an Evolved Packet Core (Evolved Packet Core, EPC), a 5G Core Network (5G Core Network, 5GCN), or a Next Generation Core (Next Generation Core, NGC).

It may be understood that the communication system described in the embodiments of the present disclosure is for the purpose of more clearly illustrating the technical solutions of the embodiments of the present disclosure, and does not constitute a limitation on the technical solutions proposed in the embodiments of the present disclosure. Those of ordinary skill in the art will know that with the evolution of system architectures and the emergence of new service scenarios, the technical solutions proposed in the embodiments of the present disclosure are equally applicable to similar technical problems.

The following embodiments of the present disclosure may be applied to the communication system 100 shown in FIG. 1 or some of its subjects, but are not limited thereto. Each subject shown in FIG. 1 is an example. The communication system may include all or part of the subjects in FIG. 1, or may include other subjects not shown in FIG. 1. The number and form of each subject are arbitrary, and each subject may be physical or virtual. The connection relationship between each subject is an example. Each subject may or may not be connected, and the connection may be in any manner, which may be a direct connection or an indirect connection, a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (New-RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN), Device-to-Device (D2D) system, Machine to Machine (M2M) system, Internet of Things (IoT) system, Vehicle-to-Everything (V2X), systems using other communication methods, next-generation systems extended based on them, etc. In addition, a combination of multiple systems (for example, a combination of LTE or LTE-A and 5G, etc.) may also be applied.

In some embodiments, a terminal needs to perform mobility measurement on one or more measurement objects (Measurement Object, MO) configured by a network device (the MO corresponds to a signal of a neighboring cell and a signal of another carrier to be measured), and report the measurement result to the network device, which is used for the network device to determine a current communication status of the terminal and further perform the mobility management on the terminal. Due to manufacturing cost and form factor constraints, the terminal may operate only at the same frequency point at the same time, and at that time the terminal may only measure an MO centered on that frequency point.

The terminal may easily measure the neighbor cell signal that is at the same frequency as a current operating frequency point, while simultaneously receiving and transmitting data in a serving cell. However, when performing the measurement on different frequencies (inter-frequency neighboring cells) and other systems (other wireless networks whose frequency is 5G NR), communication (TX/RX) with the serving cell must be suspended, and an RF module needs to be adjusted to configure the frequency, and after a period of time, connection with the serving cell is resumed. A time interval during which the terminal suspends the communication with the serving cell to measure the inter-frequency neighboring cell or another wireless neighboring cell is referred to as a measurement gap.

In some embodiments, the network device configures a plurality of MOs for the terminal. Due to limitations of software and hardware capabilities, a number of measurements that the terminal may execute in parallel is limited. Once the number of MOs configured by the network device for the UE exceeds a capability of the terminal, the terminal has to perform measurements of the respective MOs in a time-division manner.

For measurement of each MO, time division inevitably causes an increase in a time required to collect required measurement samples, which is reflected in the measurement indicator as proportional extension of a measurement delay indicator and the like. Here, a concept of a carrier specific scaling factor (CSSF) is introduced, that is, a scaling factor CSSF is multiplied on a basis of an original delay indicator of a single carrier (MO).

For a plurality of configured MOs that need to be measured based on the MG, there may be a case where a plurality of MOs compete for an MG occasion. At this time, the terminal needs to determine a scaling factor of each MO to determine a corresponding measurement requirement, such as a measurement interval in a time domain. Thus, a scaling factor corresponding to each MO#i is CSSF_{within_gap,i};
for a plurality of configured MOs that do not need to be measured based on an MG, measurement is performed based on an SMTC, and there may be a case where a plurality of MOs compete for an SMTC occasion. At this time, likewise, the terminal needs to determine a scaling factor of each MO to determine a corresponding measurement requirement, such as a measurement interval in a time domain. Thus, a scaling factor corresponding to each MO#i is CSSF_{outside_gap,i}.

FIG. 2 is an interaction schematic diagram of a communication method shown according to embodiments of the present disclosure. As shown in FIG. 2, the embodiments of the present disclosure relate to a communication method, and the method includes:
step S2101, a network device sends configuration information.

In some embodiments, a terminal receives the configuration information. Alternatively, it may be understood that the terminal receives the configuration information sent by the network device.

In some embodiments, the network device sends the configuration information to the terminal.

In some embodiments, the configuration information is used to configure a plurality of measurement objects. Optionally, the configuration information configures a time-frequency resource of each measurement object among the plurality of measurement objects. Optionally, the configuration information includes information such as a resource position and beam information of the plurality of measurement objects. Optionally, the configuration information is used to indicate the plurality of measurement objects.

In some embodiments, the measurement object refers to a signal to be measured by the terminal. In some embodiments, the measurement object refers to a signal of a neighboring cell. In some embodiments, the measurement object refers to a signal of another carrier of a neighboring cell.

In some embodiments, the measurement object may also be referred to as an object to be measured, a measurement signal, a target object, or the like, and the embodiments of the present disclosure do not limit this.

In some embodiments, a name of the configuration information is not limited. For example, the configuration information may be first information, configuration signaling, indication information, indication signaling, or the like.

In some embodiments, the configuration information is carried in RRC signaling, MAC CE signaling, DCI signaling, or other signaling, and the embodiments of the present disclosure do not limit the signaling carrying the configuration information.

Optionally, when the configuration information is carried in the RRC signaling, the network device sends the RRC signaling, and the RRC signaling carries the configuration information. Optionally, the terminal receives the RRC signaling and acquires the carried configuration information through the RRC signaling.

In some embodiments, the embodiments of the present disclosure are described by taking an example in which the network device sends the configuration information and the terminal receives the configuration information. In other embodiments, step S2101 may not be performed, and instead the terminal obtains the configuration information in other manners.

Optionally, the terminal obtains configuration information specified by a protocol.

Optionally, the terminal obtains configuration information from a higher layer.

Optionally, the terminal performs processing so as to obtain the configuration information.

Optionally, the terminal autonomously implements a function indicated by the configuration information, or the above functions are default or preset.

Step S2102, the terminal determines a plurality of measurement objects based on the configuration information.

In some embodiments, the configuration information is used to configure a plurality of measurement objects. After obtaining the configuration information, the terminal parses the configuration information to obtain the plurality of measurement objects.

Step S2103, the terminal supports simultaneous execution of K measurements that are not based on a measurement gap.

In some embodiments, each measurement includes measurement of at least one type of a measurement object.

In some embodiments, the terminal supports simultaneously measuring K types of measurement objects.

In some embodiments, the measurement object is not measured according to the measurement gap. Optionally, that the measurement object is measured not according to the measurement gap means that, when the measurement object is measured, the measurement is performed without being based on the measurement gap. Optionally, that the measurement object is measured not according to a measurement gap means that, during the measurement, the terminal does not need to adjust a measurement frequency. Optionally, that the measurement object is measured not according to a measurement gap means that SMTC measurement is performed.

In some embodiments, the configuration information is carried in the RRC signaling.

In some embodiments, a name of the measurement gap is not limited. For example, the measurement gap may be referred to as a measurement gap, a measurement duration, an interval duration, or the like.

In some embodiments, K is a positive integer no less than 2. For example, K is 2, 3, 4, or another value. Optionally, when K is 2, the terminal supports simultaneous execution of 2 measurements that are not based on the measurement gap. Optionally, when K is 3, the terminal supports simultaneous execution of 3 measurements that are not based on the measurement gap.

Optionally, when K is 2, the terminal supports simultaneously measuring 2 types of measurement objects. Optionally, when K is 3, the terminal supports simultaneously measuring 3 types of measurement objects.

In some embodiments, a value of K is related to a measurement system configured for the terminal. Each set of measurement systems respectively corresponds to its own measurement occasion, that is, K is a number of sets of measurement systems configured for the terminal. Optionally, the measurement system may be referred to as a searcher, and a number of searchers included in the terminal is the value of K.

In some embodiments, the type of the measurement object includes at least one of:
a PCC of FR1;
a PCC of FR2;
a PSCC of FR1;
a PSCC of FR2;
an FR2 SCC requiring neighbor cell measurement;
an FR1 SCC;
an FR2 SCC without requiring neighbor cell measurement;
an inter-frequency MO without requiring an MG; or
an inter-system MO without requiring an MG.

In some embodiments, the terminal may measure at least one of the above types of measurement objects. It may also be understood that at least one of an FR1 PSCC, an FR2 PSCC, an FR2 SCC requiring neighbor cell measurement, an FR1 SCC, an FR2 SCC without requiring neighbor cell measurement, an inter-frequency MO without requiring an MG, or an inter-system MO without requiring an MG may be used as a measurement object of the terminal.

In some embodiments, each type of measurement object includes at least one measurement object. For example, a measurement object of the FR1 PCC type includes one PCC. For another example, a measurement object of the FR2 SCC type requiring neighbor cell measurement includes five SCCs.

In some embodiments, the measurement of the K types of measurement objects is configured for layer 3 mobility management or layer 1 mobility management.

Step S2104: the network device determines that the terminal supports simultaneous execution of K measurements that are not based on a measurement gap.

In some embodiments, when the terminal measures the measurement objects, the terminal needs to report a measurement result of each type of measurement object to the network device. Therefore, the network device needs to determine a number of types of measurement objects that the terminal supports to be simultaneously measured, so as to determine when to receive the measurement result sent by the terminal.

Step S2105: the terminal determines a scaling factor of a first measurement object according to a communication scenario where the terminal is currently located and a first type of the first measurement object.

In some embodiments, the scaling factor is used to determine a delay of measurement for the first measurement object. In some embodiments, the scaling factor is used to enlarge a delay of measurement for the first measurement object. In some embodiments, the scaling factor is used to increase a delay of measurement for the first measurement object. In some embodiments, the scaling factor is used to amplify a delay of measurement for the first measurement object. In some embodiments, the measurement delay in a protocol may include at least one of a PSS/SSS synchronization delay requirement, an SSB index acquisition delay requirement, or a measurement delay requirement.

It should be noted that the delay of measurement for the first measurement object refers to a delay of a single measurement object.

In some embodiments, the first measurement object is one or more of a plurality of measurement objects configured by the network device for the terminal.

In some embodiments, the scaling factor is a CSSF (Carrier-specific scaling factor).

In some embodiments, a name of the scaling factor is not limited. For example, the scaling factor may be an enlargement factor, an enlargement coefficient, an amplification multiple, an amplification coefficient, or the like.

In some embodiments, a product of the scaling factor of the first measurement object and a measurement delay of the first measurement object is determined as an enlarged measurement delay.

In some embodiments, the first measurement object is any one of the plurality of measurement objects that have been configured for the terminal. In some embodiments, the first measurement object is a generic reference and does not refer to a specific measurement object. For example, if the terminal has been configured with a measurement object 1, a measurement object 2, and a measurement object 3, then the first measurement object may be any one of the measurement object 1, the measurement object 2, and the measurement object 3. For example, it may be the measurement object 1, or it may be the measurement object 2, or it may be the measurement object 3.

In some embodiments, the terminal determines the scaling factor of the first measurement object according to the communication scenario where the terminal is currently located and a priority of the first type.

Optionally, the communication scenario includes at least one of:
an EN-DC scenario;
an SA scenario;
an NR-DC scenario; or
an NE-DC scenario.

In some embodiments, the EN-DC scenario includes at least one of:
an ENDC scenario with only FR1 CA;
an ENDC scenario with only FR2 intra-band CA;
an ENDC scenario with only FR2 inter-band CA;
an ENDC scenario with FR1+FR2 CA, and a PSCell in FR1; or
an ENDC scenario with FR1+FR2 CA, and a PSCell in FR2.

In some embodiments, the SA scenario includes at least one of:
an SA scenario with only FR1 CA;
an SA scenario with only FR2 intra-band CA;
an SA scenario with only FR2 inter-band CA;
an SA scenario with FR1+FR2 CA, and a PCell in FR1; or
an SA scenario with FR1+FR2 CA, and a PCell in FR2.

In some embodiments, the NR-DC scenario includes: an NR-DC scenario with a PCell in FR1 and a PSCell in FR2.

In some embodiments, the NE-DC scenario includes at least one of:
NE-DC with only FR1 CA;
NE-DC with only FR2 intra-band CA;
NE-DC with only FR2 inter-band CA; or
NE-DC with FR1 and FR2 CA, and a PCell in FR1.

In some embodiments, types of measurement objects corresponding to different communication scenarios are also different.

Optionally, when the communication scenario is an ENDC scenario with only FR1 CA, the measurement objects include an FR1 PSCC, an FR1 SCC, an inter-frequency MO without requiring an MG, and an inter-system MO without requiring an MG.

Optionally, when the communication scenario is an ENDC scenario with only FR2 intra-band CA, the measurement objects include an FR2 PSCC, an FR2 SCC without requiring neighbor cell measurement, an inter-frequency MO without requiring an MG, and an inter-system MO without requiring an MG.

Optionally, when the communication scenario is an ENDC scenario with only FR2 inter-band CA, the measurement objects include an FR2 PSCC, an FR2 SCC requiring neighbor cell measurement, an FR2 SCC without requiring neighbor cell measurement, an inter-frequency MO without requiring an MG, and an inter-system MO without requiring an MG.

Optionally, when the communication scenario is an ENDC scenario with FR1+FR2 CA and a PSCell in FR1, the measurement objects include an FR1 PSCC, an FR1 SCC, an FR2 SCC requiring neighbor cell measurement, an FR2 SCC without requiring neighbor cell measurement, an inter-frequency MO without requiring an MG, and an inter-system MO without requiring an MG.

Optionally, when the communication scenario is an ENDC scenario with FR1+FR2 CA and a PSCell in FR2, the measurement objects include an FR1 SCC, an FR2 PSCC, an FR2 SCC without requiring neighbor cell measurement, an inter-frequency MO without requiring an MG, and an inter-system MO without requiring an MG.

The present disclosure takes an ENDC scenario as an example. For other scenarios, reference may be made to subsequent Tables 1 to 8 to determine types of measurement objects included in different scenarios and the types of measurement objects in any one of Tables 1 to 8.

In some embodiments, when the priority of the first type is higher than a priority of a second type, the scaling factor of the first measurement object is determined as 1; when the priority of the first type is lower than the priority of the second type, the scaling factor of the first measurement object is determined according to a number of measurement objects of each second type; where the second type is a type of other measurement objects, other than the measurement objects of the first type, configured by the network device for the terminal in the current communication scenario.

In some embodiments, the scaling factor of the first measurement object is determined according to the communication scenario where the terminal is currently located, a priority coefficient of the first type, and K.

In some embodiments, when the priority of the first type is higher than a priority of a second type, the scaling factor of the first measurement object is determined as 1; when the priority of the first type is lower than the priority of the second type, the scaling factor of the first measurement object is determined according to a number of measurement objects of each second type, the priority coefficient of the first type, and K; where the second type is another measurement object, other than the measurement object of the first type, configured by the network device for the terminal in the current communication scenario.

In some embodiments, each second type corresponds to one or a plurality of priority coefficients.

In some embodiments, the terminal determines the scaling factor in a table lookup manner. Optionally, after determining the communication scenario where the terminal is currently located and the type of the measurement object, the terminal may directly determine a corresponding scaling factor according to the communication scenario and the type of the measurement object.

Optionally, when the scaling factor needs to be determined according to numbers of the plurality of types of measurement objects, the scaling factor is determined according to the numbers of the plurality of types of measurement objects, K, and the priority coefficient.

In some embodiments, the first type to which the first measurement object belongs refers to a type corresponding to the first measurement object. For example, it may be any one of the types of an FR1 PSCC, an FR2 PSCC, an FR2 SCC requiring neighbor cell measurement, an FR1 SCC, an FR2 SCC without requiring neighbor cell measurement, an inter-frequency MO without requiring an MG, or an inter-system MO without requiring an MG in the above embodiments.

In some embodiments, the number of measurement objects included in the first type to which the first measurement object belongs refers to a number of all measurement objects included in the type. For example, when the first type to which the first measurement object belongs is an FR2 SCC requiring neighbor cell measurement, the number of measurement objects included in the type of the FR2 SCC requiring neighbor cell measurement is determined.

In the embodiments of the present disclosure, the terminal determines the scaling factor of the first measurement object according to the first type to which the first measurement object belongs, the number of measurement objects included in the first type, and K.

In some embodiments, a process in which the terminal determines the scaling factor of the first measurement object according to the first type to which the first measurement object belongs, the number of measurement objects included in the first type, and K may also be understood as: the terminal determines the scaling factor of the first measurement object according to the first type to which the first measurement object belongs, a number of measurement objects related to the first type, and K. Alternatively, the terminal determines the scaling factor of the first measurement object according to the first type to which the first measurement object belongs, a number of configured measurement objects, and K.

In some embodiments, different manners are adopted to process the first type to which the first measurement object belongs and the number of measurement objects included in the first type according to different values of K, so as to obtain the scaling factor of the first measurement object.

In some embodiments, if K is 2, a first manner is adopted to process the first type to which the first measurement object belongs and the number of measurement objects included in the first type, so as to obtain the scaling factor of the first measurement object.

In some embodiments, if K is greater than 2, a second manner is adopted to process the first type to which the first measurement object belongs and the number of measurement objects included in the first type, so as to obtain the scaling factor of the first measurement object.

In some embodiments, types to which measurement objects belong correspond to priorities, the types of the measurement objects are sorted according to the priorities, and then the scaling factor is determined according to a sorting result.

Optionally, types to which configured measurement objects belong are sorted according to priorities of the types to which the configured measurement objects belong, to obtain a sorting result of the first type; a first quantity of measurement objects included in types having the same priority as the first type is determined according to the sorting result; and the scaling factor of the first measurement object is determined according to the type to which the first measurement object belongs, the first quantity, and K.

In some embodiments, the first quantity of measurement objects included in types having the same priority as the first type includes: a number of measurement objects included in the first type and numbers of measurement objects included in another type which has the same priority as the first type. For example, when the first type is type A, and types having the same priority as the first type include type B and type C, the first quantity of measurement objects included in the types having the same priority as the first type includes: a sum of the numbers of measurement objects included in type A, type B, and type C.

In one possible implementation, the terminal is configured with a plurality of types of measurement objects, and each type of measurement object corresponds to one priority. Then, the types of the measurement objects are sorted according to priorities of the configured plurality of types of measurement objects, to obtain a sorting result in descending order of priority. According to the sorting result, a first quantity of measurement objects included in types having the same priority as the first type is determined, and the scaling factor of the first measurement object is determined according to the type to which the first measurement object belongs, the first quantity, and K.

For example, each type of measurement object corresponds to one manner. Then, a manner for calculating the scaling factor is determined according to a value of K and the type to which the first measurement object belongs, and the scaling factor is calculated according to the manner for calculating the scaling factor. It may also be understood that, according to the type to which the first measurement object belongs and the value of K, a calculation manner of the first measurement object may be determined, and then the scaling factor of the first measurement object is determined according to the calculation manner.

For example, when K is 2 and the type to which the first measurement object belongs is an FR1 PSCC, a calculation manner corresponding to K=2 and the FR1 PSCC type is adopted to calculate the scaling factor. For example, the calculation manner corresponding to K=2 and the FR1 PSCC type means that the scaling factor is a fixed value. In this case, it is unnecessary to process the first quantity of measurement objects included in types having the same priority as the first type, and the scaling factor is directly determined as the fixed value. For example, the fixed value is 1, that is, the scaling factor is 1. For another example, when K=2 and the type to which the first measurement object belongs is an FR1 SCC type, a calculation manner corresponding to K=2 and the FR1 SCC type is adopted to calculate the scaling factor. For example, the calculation manner corresponding to K=2 and the FR1 SCC type means that the first quantity of measurement objects included in types having the same priority as the first type is determined as the scaling factor, where when the types having the same priority as the first type include three types, the scaling factor is determined as the number of measurement objects included in the three types.

For example, when K is greater than 2 and the type to which the first measurement object belongs is an FR1 PSCC, a calculation manner corresponding to K>2 and the FR1 PSCC type is adopted to calculate the scaling factor. For example, the calculation manner corresponding to K>2 and the FR1 PSCC type means that the scaling factor is a fixed value. In this case, it is unnecessary to process the first quantity of measurement objects included in types having the same priority as the first type, and the scaling factor is directly determined as the fixed value. For example, the fixed value is 1, that is, the scaling factor is 1. For another example, when K>2 and the type to which the first measurement object belongs is an FR1 SCC type, a calculation manner corresponding to K>2 and the FR1 SCC type is adopted to calculate the scaling factor. For example, the calculation manner corresponding to K>2 and the FR1 SCC type means that a product of the first quantity of measurement objects included in types having the same priority as the first type and a priority coefficient is determined as the scaling factor. When the types having the same priority as the first type include three types, the scaling factor is determined as the number of measurement objects included in the three types. The priority coefficient refers to a coefficient corresponding to the first measurement object. Optionally, the priority coefficient is agreed upon by a communication protocol, configured by a network device, or determined by the terminal itself, and the like.

In some embodiments, a type to which a measurement object belongs corresponds to a priority coefficient, and the priority coefficient is used to indicate a priority of the type to which the measurement object belongs; and the terminal determines the scaling factor of the first measurement object according to the priority coefficient corresponding to the type to which the first measurement object belongs, the type to which the first measurement object belongs, the first quantity, and K.

Optionally, the priority coefficient is proportional to a priority of the type to which the measurement object belongs. That is, the higher the priority coefficient corresponding to the type to which the measurement object belongs, the higher the priority of the measurement object, and the lower the priority coefficient corresponding to the type to which the measurement object belongs, the lower the priority of the measurement object.

Optionally, the priority coefficient is inversely proportional to the priority of the type to which the measurement object belongs. That is, the lower the priority coefficient corresponding to the type to which the measurement object belongs, the higher the priority of the measurement object, and the higher the priority coefficient corresponding to the type to which the measurement object belongs, the lower the priority of the measurement object.

In some embodiments, according to the sorting result, the measurement objects of the type having a highest priority are determined as one group, and for the measurement objects of all other types except the type having the highest priority, the measurement objects are divided into K-1 groups according to the priority coefficients corresponding to the other types, and the first quantity is determined according to a number of measurement objects included in each type included in the obtained groups.

Optionally, for the measurement objects of all other types except the type having the highest priority, the measurement objects are divided into K-1 groups according to the priority coefficients corresponding to the other types, including: for measurement objects of all other types except the type having the highest priority, the measurement objects of the first K-2 types having the highest priorities are each separately divided into one group, and measurement objects of all remaining types are divided into one group.

Optionally, according to the sorting result, the measurement objects of the type having the highest priority are determined as one group. For measurement objects of all other types except the type having the highest priority, the measurement objects of the first K-2 types having the highest priorities are each separately divided into one group, and the measurement objects of all remaining types are divided into one group. According to the number of measurement objects included in each type included in the obtained groups, a first quantity is determined.

In some embodiments, a type to which a measurement object belongs corresponds to a priority coefficient, and the priority coefficient is used to indicate a priority of the type to which the measurement object belongs. According to the sorting result, the measurement objects of a type having a highest priority are determined as one group, and for measurement objects of all other types except the type having the highest priority, the measurement objects of the first K-2 types having the highest priorities are each separately divided into one group, and the measurement objects of all remaining types are divided into one group.The first quantity is determined according to a number of measurement objects included in each type included in the obtained groups. The terminal determines the scaling factor of the first measurement object according to the priority coefficient corresponding to the type to which the first measurement object belongs, the type to which the first measurement object belongs, the first quantity, and K.

Optionally, for the type having the highest priority, the type may not correspond to a priority coefficient, and for other types other than the type having the highest priority, each type corresponds to one priority coefficient, and grouping is performed according to priorities corresponding to the priority coefficients.

Optionally, for the type having the highest priority, a priority coefficient corresponding to the type is 1, and for other types other than the type having the highest priority, each type corresponds to one priority coefficient, and grouping is performed according to priorities corresponding to the priority coefficients.

Optionally, for other types other than the type having the highest priority, each type corresponds to one priority coefficient, and a sum of priority coefficients of the other types other than the type having the highest priority is 1. For example, in an EN-DC scenario with only FR1 CA, configured measurement types include FR1 PSCC, FR1 SCC, an inter-frequency MO not requiring MG, and an inter-frequency MO not requiring MG. If K=3, the FR1 PSCC has the highest priority, and by setting, for example, P1=50% and P2=P3=25%, where P1 is a priority coefficient of the FR1 SCC type, P2 is a priority coefficient of the inter-frequency MO type not requiring MG, and P3 is a priority coefficient of the inter-frequency MO type not requiring MG.

For example, in an NR-DC scenario in which a PCell is in an FR1 frequency band and a PSCell is in an FR2 frequency band, the configured measurement types include FR1 PCC, FR1 SCC, FR2 PSCC, an FR2 SCC not requiring neighbor cell measurement, an inter-frequency MO not requiring MG, and an inter-frequency MO not requiring MG. If K=3, FR1 PCC has the highest priority, and by setting, for example, P1=1/2 and P2=P3=P4=P5=1/8, where P1 is a priority coefficient of the FR2 PSCC type, P2 is a priority coefficient of the FR2 SCC type not requiring neighbor cell measurement, P3 corresponds to a priority coefficient of the inter-frequency MO type not requiring MG, P4 corresponds to a priority coefficient of the inter-frequency MO measurement type not requiring MG, and P5 corresponds to a priority coefficient of the FR1 SCC measurement type.

For example, in an NR-DC scenario in which a PCell is in an FR1 frequency band and a PSCell is in an FR2 frequency band, configured measurement types include FR1 PCC, FR1 SCC, FR2 PSCC, an FR2 SCC not requiring neighbor cell measurement, an inter-frequency MO not requiring MG, and an inter-frequency MO not requiring MG. If K=4, FR1 PCC has the highest priority, and by setting, for example, P1=3/2 and P2=P3=P4=P5=3/8, where P1 is a priority coefficient of the FR2 PSCC type, P2 is a priority coefficient of the FR2 SCC type not requiring neighbor cell measurement, P3 corresponds to a priority coefficient of the inter-frequency MO type not requiring MG, P4 corresponds to a priority coefficient of the inter-frequency MO measurement type not requiring MG, and P5 corresponds to a priority coefficient of the FR1 SCC measurement type.

It should be noted that, in a case where a measurement object corresponds to a priority coefficient, a value of K supported by the terminal is greater than 2. That is, a manner corresponding to K>2 is adopted to determine the scaling factor of the first measurement object according to the first type to which the first measurement object belongs and a number of measurement objects included in the first type.

In some embodiments, the terminal further needs to consider a communication scenario supported by the terminal. Therefore, the terminal needs to determine the scaling factor of the first measurement object according to the communication scenario supported by the terminal, the first type to which the first measurement object belongs, a number of measurement objects included in the first type, and K.

It should be noted that, in the embodiments of the present disclosure, a solution of grouping according to priorities of types of measurement objects is actually a process of generating scaling factors of measurement objects of each type. It may also be understood that a communication protocol presets a priority corresponding to each type, and then the measurement objects of each type are grouped according to the priority, so as to generate, according to the obtained groups, a manner of determining the scaling factor corresponding to each measurement object.

Below, by way of examples, how the terminal determines the scaling factor of the first measurement object according to the communication scenario, the first type to which the first measurement object belongs, the number of measurement objects included in the first type, and K is described.

Referring to Table 1, the scenario supported by the terminal is an EN-DC scenario and K>2, and a manner of determining the scaling factor includes:

**Table 1**

| EN-DC scenario | Scali ng factor of FR1 PSC C | Scaling factor of FR1 SCC | Scali ng factor of FR2 PSC C | Scaling factor of FR2 SCC requiring neighbor cell measurem ent | Scaling factor of FR2 SCC not requiring neighbor cell measureme nt | Scaling factor of inter-freque ncy MO not requiring MG | Scaling factor of inter-system MO not requiring MG |
|---|---|---|---|---|---|---|---|
| EN-DC scenario with only FR1 CA | 1 | (Number of FR1 SCells + number of inter-freque ncy MOs not requiring MG + number of inter-system MOs not requiring MG) / (K-1) * P1 | N/A | N/A | N/A | (Number of FR1 SCells + number of inter-freque ncy MOs not requiring MG + number of inter-system MOs not requiring MG) / (K-1) * P2 | (Number of FR1 SCells + number of inter-freque ncy MOs not requiring MG + number of inter-system MOs not requiring MG) / (K-1) * P3 |
| EN-DC scenario with only intra-ba nd FR2 CA | N/A | N/A | 1 | N/A | (Number of FR2 SCells + number of inter-freque ncy MOs not requiring MG + number of inter-system MOs not requiring MG) / (K-1) * P4 | (Number of FR2 SCells + number of inter-freque ncy MOs not requiring MG + number of inter-system MOs not requiring MG) / (K-1) * P5 | (Number of FR2 SCells + number of inter-freque ncy MOs not requiring MG + number of inter-system MOs not requiring MG) / (K-1) * P6 |
| EN-DC | N/A | N/A | 1 | 2 / (K-1) | (2 × | (2 × | (2 × |
| scenario with only inter-ba nd FR2 CA | | | | * P7 | (Number of FR2 SCells + number of inter-freque ncy MOs not requiring MG + number of inter-system MOs not requiring MG - 1)) / (K-1) * P8 | (Number of FR2 SCells + number of inter-freque ncy MOs not requiring MG + number of inter-system MOs not requiring MG - 1)) / (K-1) * P9 | (Number of FR2 SCells + number of inter-freque ncy MOs not requiring MG + number of inter-system MOs not requiring MG - 1)) / (K-1) * P10 |
| EN-DC scenario with FR1+F R2 CA and PSCell in FR1 | 1 | (2 × (Number of SCells + number of inter-freque ncy MOs not requiring MG + number of inter-system MOs not requiring MG - 1)) / (K-1) * P11 | N/A | 2 / (K-1) * P12 | (2 × (Number of SCells + number of inter-freque ncy MOs not requiring MG + number of inter-system MOs not requiring MG - 1)) / (K-1) * P13 | (2 × (Number of SCells + number of inter-freque ncy MOs not requiring MG + number of inter-system MOs not requiring MG - 1)) / (K-1) * P14 | (2 × (Number of SCells + number of inter-freque ncy MOs not requiring MG + number of inter-system MOs not requiring MG - 1)) / (K-1) * P15 |
| EN-DC scenario with FR1+F R2 CA and PSCell in FR2 | N/A | (Number of SCells + number of inter-freque ncy MOs not requiring MG + number of inter-system MOs not requiring MG) / (K-1) * P16 | 1 | N/A | (Number of SCells + number of inter-freque ncy MOs not requiring MG + number of inter-system MOs not requiring MG) / (K-1) * P17 | (Number of SCells + number of inter-freque ncy MOs not requiring MG + number of inter-system MOs not requiring MG) / (K-1) * P18 | (Number of SCells + number of inter-freque ncy MOs not requiring MG + number of inter-system MOs not requiring MG) / (K-1) * P19 |

In some embodiments, values of Pi in Table 1 may be the same or may be different, and the embodiments of the present disclosure do not limit this, where i is not greater than 19. In some embodiments, FR1 SCell may be understood as a number of measurement objects included in an FR1 SCC type.

Referring to Table 2, the scenario supported by the terminal is an SA scenario and K>2, and a manner of determining the scaling factor includes:

**Table 2**

| Scenari o | Scali ng factor of FR1 PSC C | Scaling factor of FR1 SCC | Scali ng factor of FR2 PSCC | Scaling factor of FR2 SCC requirin g neighbo r cell measure ment | Scaling factor of FR2 SCC not requiring neighbor cell measureme nt | Scaling factor of inter-frequen cy MO not requiring MG | Scaling factor of inter-system MO not requiring MG |
|---|---|---|---|---|---|---|---|
| SA scenario with only FR1 CA | 1 | (Number of FR1 SCells + number of inter-freque ncy MOs not requiring MG + number of inter-system MOs not requiring MG) / (K-1) * P1 | N/A | N/A | N/A | (Number of FR1 SCells + number of inter-frequen cy MOs not requiring MG + number of inter-system MOs not requiring MG) / (K-1) * P2 | (Number of FR1 SCells + number of inter-frequen cy MOs not requiring MG + number of inter-system MOs not requiring MG) / (K-1) * P3 |
| SA scenario with only intra-ba nd FR2 CA | N/A | N/A | 1 | N/A | (Number of FR2 SCells + number of inter-freque ncy MOs not requiring MG + number of inter-system MOs not requiring MG) / (K-1) * P4 | (Number of FR2 SCells + number of inter-frequen cy MOs not requiring MG + number of inter-system MOs not requiring MG) / (K-1) * P5 | (Number of FR2 SCells + number of inter-frequen cy MOs not requiring MG + number of inter-system MOs not requiring MG) / (K-1) * P6 |
| SA scenario with only inter-ba nd FR2 CA | N/A | N/A | 1 | 2/ (K-1) * P1 | (2 × (Number of FR2 SCells + number of inter-freque ncy MOs not requiring MG + number of inter-system MOs not requiring MG - 1)) / (K-1) * P7 | (2 × (Number of FR2 SCells + number of inter-frequen cy MOs not requiring MG + number of inter-system MOs not requiring MG - 1)) / (K-1) * P8 | (2 × (Number of FR2 SCells + number of inter-frequen cy MOs not requiring MG + number of inter-system MOs not requiring MG - 1)) / (K-1) * P9 |
| SA scenario with FR1+F R2 CA and PCell in FR1 | 1 | (2 × (Number of SCells + number of inter-freque ncy MOs not requiring MG + number of inter-system MOs not requiring MG - 1)) / (K-1) * P10 | N/A | 2 / (K-1) * P1 | (2 × (Number of SCells + number of inter-freque ncy MOs not requiring MG + number of inter-system MOs not requiring MG - 1)) / (K-1) * P11 | (2 × (Number of SCells + number of inter-frequen cy MOs not requiring MG + number of inter-system MOs not requiring MG - 1)) / (K-1) * P12 | (2 × (Number of SCells + number of inter-frequen cy MOs not requiring MG + number of inter-system MOs not requiring MG - 1)) / (K-1) * P13 |
| SA scenario with FR1+F R2 CA and PCell in FR2 | N/A | (Number of SCells + number of inter-freque ncy MOs not requiring MG + number of inter-system MOs not requiring MG) / (K-1) * P14 | 1 | N/A | (Number of SCells + number of inter-freque ncy MOs not requiring MG + number of inter-system MOs not requiring MG) / (K-1) * P15 | (Number of SCells + number of inter-frequen cy MOs not requiring MG + number of inter-system MOs not requiring MG) / (K-1) * P16 | (Number of SCells + number of inter-frequen cy MOs not requiring MG + number of inter-system MOs not requiring MG) / (K-1) * P17 |

In some embodiments, values of Pi in Table 1 may be the same or may be different, and the embodiments of the present disclosure do not limit this, where i is not greater than 17. In some embodiments, FR1 SCell may be understood as a number of measurement objects included in an FR1 SCC type.

Referring to Table 3, the scenario supported by the terminal is an NE-DC scenario and K>2, and a manner of determining the scaling factor includes:

**Table 3**

| Scenario | Scali ng factor of FR1 PCC | Scaling factor of FR1 SCC | Scali ng factor of FR2 PSC C | Scaling factor of FR2 SCC requiring neighbor cell measurem ent | Scaling factor of FR2 SCC not requiring neighbor cell measureme nt | Scaling factor of inter-freque ncy MO not requiring MG | Scaling factor of inter-system MO not requiring MG |
|---|---|---|---|---|---|---|---|
| NE-DC with only FR1 CA | 1 | (Number of FR1 SCells + number of inter-freque ncy MOs not requiring MG + number of inter-system MOs not requiring MG) / (K-1) * P1 | N/A | N/A | N/A | (Number of FR1 SCells + number of inter-freque ncy MOs not requiring MG + number of inter-system MOs not requiring MG) / (K-1) * P2 | (Number of FR1 SCells + number of inter-freque ncy MOs not requiring MG + number of inter-system MOs not requiring MG) / (K-1) * P3 |
| NE-DC with only intra-ba nd FR2 CA | N/A | N/A | 1 | N/A | (Number of FR2 SCells + number of inter-freque ncy MOs not requiring MG + number of inter-system MOs not requiring MG) / (K-1) * P4 | (Number of FR2 SCells + number of inter-freque ncy MOs not requiring MG + number of inter-system MOs not requiring MG) / (K-1) * P5 | (Number of FR2 SCells + number of inter-freque ncy MOs not requiring MG + number of inter-system MOs not requiring MG) / (K-1) * P6 |
| NE-DC with only inter-ba nd FR2 CA | N/A | N/A | 1 | 2 / (K-1) * P7 | (2 × (Number of FR2 SCells + number of inter-freque ncy MOs not requiring MG + number of inter-system MOs not requiring MG - 1)) / (K-1) * P8 | (2 × (Number of FR2 SCells + number of inter-freque ncy MOs not requiring MG + number of inter-system MOs not requiring MG - 1)) / (K-1) * P9 | (2 × (Number of FR2 SCells + number of inter-freque ncy MOs not requiring MG + number of inter-system MOs not requiring MG - 1)) / (K-1) * P10 |
| NE-DC with FR1 and FR2 CA and PCell in FR1 | 1 | (2 × (Number of SCells + number of inter-freque ncy MOs not requiring MG + number of inter-system MOs not requiring MG - 1)) / (K-1) * P10 | N/A | 2 / (K-1) * P1 | (2 × (Number of SCells + number of inter-freque ncy MOs not requiring MG + number of inter-system MOs not requiring MG - 1)) / (K-1) * P12 | (2 × (Number of SCells + number of inter-freque ncy MOs not requiring MG + number of inter-system MOs not requiring MG - 1)) / (K-1) * P13 | (2 × (Number of SCells + number of inter-freque ncy MOs not requiring MG + number of inter-system MOs not requiring MG - 1)) / (K-1) * P14 |

In some embodiments, values of Pi in Table 1 may be the same or may be different, and the embodiments of the present disclosure do not limit this, where i is not greater than 17. In some embodiments, FR1 SCell may be understood as a number of measurement objects included in an FR1 SCC type.

Referring to Table 3, the scenario supported by the terminal is an NE-DC scenario and K>2, and a manner of determining the scaling factor includes:

**Table 4**

| Scenari o | Scalin g factor for FR1 PCC | Scaling factor for FR1 SCC | Scaling factor for FR2 PSCC | Scaling factor for FR2 SCC not requiring neighbor-cell measurement | Scaling factor for inter-frequen cy MO not requiring MG | Scaling factor for inter-system MO not requiring MG |
|---|---|---|---|---|---|---|
| NR-DC scenari o with the PCell in FR1 and the PSCell in FR2 | 1 | (2 × (the number of SCells + the number of inter-frequen cy MOs not requiring MG + the number of inter-system MOs not requiring MG - 1))/(K-1)* P1 or (the number of SCells + the number of inter-frequen cy MOs not requiring MG + the number of inter-system MOs not requiring MG - 1)/(K-1)* P2 | 2/(K-1)* P3or1/(K-1) * P4 | (2×(the number of SCells + the number of inter-frequen cy MOs not requiring MG + the number of inter-system MOs not requiring MG - 1))/(K-1)* P5 or (the number of SCells + the number of inter-frequen cy MOs not requiring MG + the number of inter-system MOs not requiring MG - 1)/(K-1)* P6 | (2×(the number of SCells + the number of inter-frequen cy MOs not requiring MG + the number of inter-system MOs not requiring MG - 1))/(K-1)* P7 or (the number of SCells + the number of inter-frequen cy MOs not requiring MG + the number of inter-system MOs not requiring MG - 1)/(K-1)* P8 | (2×(the number of SCells + the number of inter-frequen cy MOs not requiring MG + the number of inter-system MOs not requiring MG - 1))/(K-1)* P9 or (the number of SCells + the number of inter-frequen cy MOs not requiring MG + the number of inter-system MOs not requiring MG - 1)/(K-1)* P10 |

In some embodiments, values of Pi in Table 1 may be the same or may be different, and the embodiments of the present disclosure do not limit this, where i is not greater than 10. In some embodiments, FR1 SCell may be understood as a number of measurement objects included in an FR1 SCC type.

In some embodiments, the terminal determines, according to the sorting result, measurement objects of a type having the highest priority as one group; and measurement objects of all other types, other than the measurement objects of the type having the highest priority, are determined as another group; and the first quantity is determined according to a number of measurement objects included in each type included in the obtained groups.

It should be noted that, in the above embodiments, a value of K supported by the terminal is equal to 2. That is, through a manner corresponding to K=2 is adopted, the scaling factor of the first measurement object is determined according to the first type to which the first measurement object belongs and a number of measurement objects included in the first type.

In some embodiments, the terminal further needs to consider a communication scenario supported by the terminal. Therefore, the terminal needs to determine the scaling factor of the first measurement object according to the communication scenario supported by the terminal, the first type to which the first measurement object belongs, the number of measurement objects included in the first type, and K.

Optionally, the communication scenario includes at least one of the following:
an EN-DC scenario;
an SA scenario;
an NR-DC scenario; or
an NE-DC scenario.

In some embodiments, the EN-DC scenario includes at least one of the following:
an EN-DC scenario with only FR1 CA;
an EN-DC scenario with only intra-band FR2 CA;
an EN-DC scenario with only inter-band FR2 CA;
an EN-DC scenario with FR1+FR2 CA and a PSCell in FR1; or
an EN-DC scenario with FR1+FR2 CA and a PSCell in FR2.

In some embodiments, the SA scenario includes at least one of the following:
an SA scenario with only FR1 CA;
an SA scenario with only intra-band FR2 CA;
an SA scenario with only inter-band FR2 CA;
an SA scenario with FR1+FR2 CA and a PCell in FR1; or
an SA scenario with FR1+FR2 CA and a PCell in FR2.

In some embodiments, the NR-DC scenario includes: an NR-DC scenario in which a PCell is in FR1 and a PSCell is in FR2.

In some embodiments, the NE-DC scenario includes at least one of the following:
an NE-DC with only FR1 CA;
an NE-DC with only intra-band FR2 CA;
an NE-DC with only inter-band FR2 CA; or
an NE-DC with FR1 and FR2 CA and a PCell in FR1.

Below, by way of examples, how the terminal determines the scaling factor of the first measurement object according to the communication scenario, the first type to which the first measurement object belongs, the number of measurement objects included in the first type, and K is described.

Referring to Table 5, the scenario supported by the terminal is an EN-DC scenario and K=2, and a manner of determining the scaling factor includes:

**Table 5**

| EN-DC scenario | Scaling factor of FR1 PSCC | Scaling factor of FR1 SCC | Scaling factor of FR2 PSC | Scaling factor of FR2 SCC requiring neighbor cell measurement | Scaling factor of FR2 SCC not requiring neighbor cell measurement | Scaling factor of inter-frequency MO not requiring MG | Scaling factor of inter-system MO not requiring MG |
|---|---|---|---|---|---|---|---|
| EN-DC scenario with only FR1 CA | 1 | Number of FR1 SCells + number of inter-frequency MOs not requiring MG + number of inter-system MOs not requiring MG | N/A | N/A | N/A | Number of FR1 SCells + number of inter-frequency MOs not requiring MG + number of inter-system MOs not requiring MG | Number of FR1 SCells + number of inter-frequency MOs not requiring MG + number of inter-system MOs not requiring MG |
| EN-DC scenario with only intra-ba nd FR2 CA | N/A | N/A | 1 | N/A | Number of FR2 SCells + number of inter-frequency MOs not requiring MG + number of inter-system MOs not requiring MG | Number of FR2 SCells + number of inter-frequency MOs not requiring MG + number of inter-system MOs not requiring MG | Number of FR2 SCells + number of inter-frequency MOs not requiring MG + number of inter-system MOs not requiring MG |
| EN-DC scenario with only inter-band FR2 CA | N/A | N/A | 1 | 2 | 2 × (Number of FR2 SCells + number of inter-frequency MOs not requiring MG + number of inter-system MOs not requiring MG - 1) | 2 × (Number of FR2 SCells + number of inter-frequency MOs not requiring MG + number of inter-system MOs not requiring MG- 1) O | 2 × (Number of FR2 SCells + number of inter-frequency MOs not requiring MG + number of inter-system MOs not requiring MG - 1) |
| EN-DC scenario with FR1+F R2 CA and PSCell in FR1 | 1 | 2 × (Number of SCells + number of inter-frequency MOs not requiring MG + number of inter-system MOs not requiring MG - 1) | N/A | 2 | 2 × (Number of SCells + number of inter-frequency y MOs not requiring MG + number of inter-system MOs not requiring MG- 1) | 2 × (Number of SCells + number of inter-frequency MOs not requiring MG + number of inter-system MOs not requiring MG- 1) | 2 × (Number of SCells + number of inter-frequency MOs not requiring MG + number of inter-system MOs not requiring MG - 1) |
| EN-DC scenario with FR1+F R2 CA and PSCel in FR2l | N/A | Number of SCells + number of inter-frequency MOs not requiring MG + number of inter-system MOs not requiring MG | 1 | N/A | Number of SCells + number of inter-frequency MOs not requiring MG + number of inter-system MOs not requiring MG | Number of SCells + number of inter-frequency MOs not requiring MG + number of inter-system MOs not requiring MG | Number of SCells + number of inter-frequency MOs not requiring MG + number of inter-system MOs not requiring MG |

In some embodiments, Table 5 is described by taking layer 3 measurement based on SSB as an example. In some other embodiments, measurement may also be based on layer 1, and in this case, the measurement needs to consider CSI-RS based measurement and measurement on a band. N_{PSCC_CSIRS} is for considering a measurement type based on CSI-RS, and N_{PSCC_CCA_RSSI/C}O is for considering a measurement type on an unlicensed band. In a case of different types of measurement objects, N_{PSCC_CSIRS} and N_{PSCC_CCA_RSSI/CO} need to be considered.

For example, in an EN-DC scenario with only FR1 CA, a scaling factor of FR1 PSCC is 1 + N_{PSCC_CSIRS} + N_{PSCC_CCA_RSSI/CO}.

For another example, in an EN-DC scenario with only FR1 CA, a scaling factor of FR1 SCC is a number of FR1 SCells + a number of inter-frequency MOs not requiring a MG + a number of inter-system MOs not requiring a MG + N_{PSCC_CSIRS} + N_{PSCC_CCA_RSSI/CO}.

The embodiments of the present disclosure are merely illustrative. When scaling factors of different types of measurement objects are determined in different specific scenarios, whether to add at least one of N_{PSCC_CSIRS} or N_{PSCC_CCA_RSSI/CO} needs to be considered according to circumstances.

Referring to Table 6, the scenario supported by the terminal is an SA scenario and K=2, and a manner of determining the scaling factor includes:

**Table 6**

| Scenario | Scaling factor of FR1 PCC | Scaling factor of FR1 SCC | Scaling factor of FR2 PCC | Scaling factor of FR2 SCC requiring neighbor cell measurement | Scaling factor of FR2 SCC not requiring neighbor cell measurement | Scaling factor of inter-frequency MO not requiring MG | Scaling factor of inter-system MO not requiring MG |
|---|---|---|---|---|---|---|---|
| SA scenario with only FR1 CA | 1 | number of FR1 SCells + number of inter-frequency MOs not requiring MG + number of inter-system MOs not requiring MG | N/A | N/A | N/A | number of FR1 SCells + number of inter-frequency MOs not requiring MG + number of inter-system MOs not requiring MG | number of FR1 SCells + number of inter-frequency MOs not requiring MG + number of inter-system MOs not requiring MG |
| SA scenario with only FR2 intra-band CA | N/A | N/A | 1 | N/A | number of FR2 SCells + number of inter-frequency MOs not requiring MG + number of inter-system MOs not requiring MG | number of FR2 SCells + number of inter-frequency MOs not requiring MG + number of inter-system MOs not requiring MG | number of FR2 SCells + number of inter-frequency MOs not requiring MG + number of inter-system MOs not requiring MG |
| SA scenario with only FR2 inter-band CA | N/A | N/A | 1 | 2 | 2×(number of FR2 SCells + number of inter-frequency MOs not requiring MG + number of inter-system MOs not requiring MG - 1) | 2×(number of FR2 SCells + number of inter-frequency MOs not requiring MG + number of inter-system MOs not requiring MG - 1) | 2×(number of FR2 SCells + number of inter-frequency MOs not requiring MG + number of inter-system MOs not requiring MG - 1) |
| SA scenario with FR1+F R2 CA and the PCell in FR1 | 1 | 2×(number of SCells + number of inter-frequency MOs not requiring MG + number of inter-system MOs not requiring MG- 1) | N/A | 2 | 2×(number of SCells + number of inter-frequency MOs not requiring MG + number of inter-system MOs not requiring MG - 1) | 2×(number of SCells + number of inter-frequency MOs not requiring MG + number of inter-system MOs not requiring MG- 1) | 2×(number of SCells + number of inter-frequency MOs not requiring MG + number of inter-system MOs not requiring MG - 1) |
| SA scenario with FR1+F R2 CA and the PCell in FR2 | N/A | number of SCells + number of inter-freque ncy MOs not requiring MG + number of inter-system MOs not requiring MG | 1 | N/A | number of SCells + number of inter-freque ncy MOs not requiring MG + number of inter-system MOs not requiring MG | number of SCells + number of inter-freque ncy MOs not requiring MG + number of inter-system MOs not requiring MG | number of SCells + number of inter-freque ncy MOs not requiring MG + number of inter-system MOs not requiring MG |

Referring to Table 7, the scenario supported by the terminal is an NR-DC scenario, and K=2, and the manner of determining the scaling factor includes:

**Table 7**

| Scenario | Scaling factor of FR1 PCC | Scaling factor of FR1 SCC | Scaling factor of FR2 PSCC | Scaling factor of FR2 SCC not requiring neighbor cell measurement | Scaling factor of inter-frequency MO not requiring MG | Scaling factor of inter-system MO not requiring MG |
|---|---|---|---|---|---|---|
| NR-DC scenario with the PCell in FR1 and the PSCell in FR2 | 1 | 2×(number of SCells + number of inter-frequency MOs not requiring MG + number of inter-system MOs not requiring MG - 1) | 2 | 2×(number of SCells + number of inter-frequency MOs not requiring MG + number of inter-system MOs not requiring MG - 1) | 2×(number of SCells + number of inter-frequency MOs not requiring MG + number of inter-system MOs not requiring MG - 1) | 2×(number of SCells + number of inter-frequency MOs not requiring MG + number of inter-system MOs not requiring MG - 1) |

Referring to Table 8, the scenario supported by the terminal is an NE-DC scenario, and K=2, and the manner of determining the scaling factor includes:

**Table 8**

| Scenario | Scaling factor of CSSFoutside _gap,i for FR1 PCC | Scaling factor of CSSFoutside _gap,i for FR1 SCC | Scaling factor of CSSFoutside _gap,i for FR2 PCC | Scaling factor of FR2 SCC requiring neighbor cell measurement | Scaling factor of FR2 SCC not requiring neighbor cell measurement | Scaling factor of inter-frequency MO not requiring MG | Scaling factor of inter-system MO not requiring MG |
|---|---|---|---|---|---|---|---|
| NE-DC with only FR1 CA | 1 | number of FR1 SCells + number of inter-frequency MOs not requiring MG + number of inter-system MOs not requiring MG | N/A | N/A | N/A | number of FR1 SCells + number of inter-frequency MOs not requiring MG + number of inter-system MOs not requiring MG | number of FR1 SCells + number of inter-frequency MOs not requiring MG + number of inter-system MOs not requiring MG |
| NE-DC with only FR2 intra-b and CA | N/A | N/A | 1 | N/A | number of FR2 SCells + number of inter-frequency MOs not requiring MG + number of inter-system MOs not requiring MG | number of FR2 SCells + number of inter-frequency MOs not requiring MG + number of inter-system MOs not requiring MG | number of FR2 SCells + number of inter-frequency MOs not requiring MG + number of inter-system MOs not requiring MG |
| NE-DC with only FR2 inter-b and CA | N/A | N/A | 1 | 2 | 2×(number of SCells + number of inter-frequency MOs not requiring MG + number of inter-system MOs not requiring MG - 1) | 2×(number of SCells + number of inter-frequency MOs not requiring MG + number of inter-system MOs not requiring MG - 1) | 2×(number of SCells + number of inter-frequency MOs not requiring MG + number of inter-system MOs not requiring MG - 1) |
| NE-DC with FR1 and FR2 CA and the PCell in FR1 | 1 | 2×(number of SCells + number of inter-frequency MOs not requiring MG + number of inter-system MOs not requiring MG - 1) | N/A | 2 | 2×(number of SCells + number of inter-frequency MOs not requiring MG + number of inter-system MOs not requiring MG - 1) | 2×(number of SCells + number of inter-frequency MOs not requiring MG + number of inter-system MOs not requiring MG - 1) | 2×(number of SCells + number of inter-frequency MOs not requiring MG + number of inter-system MOs not requiring MG - 1) |

In some embodiments, the names of information and the like are not limited to the names recorded in the embodiments. The terms "information", "message ", "signal", "signaling", "report", "configuration", "indication", "instruction", "command", "channel", "parameter", "field", "domain", "symbol", "code symbol (symbol)", "codebook", "codeword", "codepoint", "bit", "data", "program", "chip", and the like may be used interchangeably.

In some embodiments, the terms "uplink", "uplink link", and "physical uplink link" may be used interchangeably; the terms "downlink", "downlink link", and "physical downlink link" may be used interchangeably; and the terms "side", "sidelink", "sidelink communication", "sidelink link communication", "direct connection", "direct connection link", "direct connection communication", and "direct connection link communication" may be used interchangeably.

In some embodiments, the terms "obtain", "acquire", "get", "receive", "transmit", "bidirectional transmission", and "send and/or receive" may be used interchangeably, and may be interpreted as having various meanings such as receiving from another entity, obtaining from a protocol, obtaining from a higher layer, being obtained through self-processing, or being autonomously implemented.

In some embodiments, the terms "send", "transmit", "report", "deliver", "transmit", "bidirectional transmission", and "send and/or receive" may be used interchangeably.

In some embodiments, the terms "moment", "time point", "time", and "time position" may be used interchangeably, and the terms "duration", "time period", "time window", "window", and "time" may be used interchangeably.

In some embodiments, the terms "certain", "preseted", "predefined", "set", "indicated", "one", "any", and "first" may be used interchangeably. "Certain A", "preset A", "predefined A", "set A", "indicated A", "one A", "any A", and "first A" may be interpreted as A being predefined in a protocol or the like, may also be interpreted as A obtained through setting, configuration, or indication, and may also be interpreted as a certain A, one A, any A, or a first A, but are not limited thereto.

The communication method involved in the embodiments of the present disclosure may include at least one of steps S2101 to S2105. For example, step S2101 may be implemented as an independent embodiment, step S2102 may be implemented as an independent embodiment, step S2103 may be implemented as an independent embodiment, step S2104 may be implemented as an independent embodiment, step S2105 may be implemented as an independent embodiment, steps S2101 and S2102 may be implemented as an independent embodiment, steps S2101 and S2103 may be implemented as an independent embodiment, steps S2101 and S2104 may be implemented as an independent embodiment, steps S2101 and S2105 may be implemented as an independent embodiment, steps S2102 and S2103 may be implemented as an independent embodiment, steps S2102 and S2104 may be implemented as an independent embodiment, steps S2102 and S2105 may be implemented as an independent embodiment, steps S2101, S2102, and S2103 may be implemented as an independent embodiment, steps S2101, S2102, and S2104 may be implemented as an independent embodiment, steps S2101, S2102, and S2105 may be implemented as an independent embodiment, steps S2101, S2103, and S2104 may be implemented as an independent embodiment, steps S2101, S2103, and S2105 may be implemented as an independent embodiment, steps S2102, S2103, and S2104 may be implemented as an independent embodiment, steps S2102, S2103, and S2105 may be implemented as an independent embodiment, and steps S2103, S2104, and S2105 may be implemented as an independent embodiment, but are not limited thereto.

In some embodiments, steps S2101, S2102, step S2103, and step S2104 are optional, and in different embodiments, one or more of these steps may be omitted or replaced.

In some embodiments, steps S2101, S2102, step S2103, and step S2105 are optional, and in different embodiments, one or more of these steps may be omitted or replaced.

In some embodiments, steps S2102, step S2103, step S2104, and step S2105 are optional, and in different embodiments, one or more of these steps may be omitted or replaced.

In some embodiments, steps S2101, step S2103, step S2104, and step S2105 are optional, and in different embodiments, one or more of these steps may be omitted or replaced.

In some embodiments, steps S2101, S2102, and step S2103 are optional, and in different embodiments, one or more of these steps may be omitted or replaced.

In some embodiments, steps S2101, S2102, and step S2104 are optional, and in different embodiments, one or more of these steps may be omitted or replaced.

In some embodiments, steps S2101, S2102, and step S2105 are optional, and in different embodiments, one or more of these steps may be omitted or replaced.

In some embodiments, steps S2102, step S2103, and step S2104 are optional, and in different embodiments, one or more of these steps may be omitted or replaced.

In some embodiments, steps S2102, S2103, and step S2105 are optional, and in different embodiments, one or more of these steps may be omitted or replaced.

In some embodiments, steps S2103, S2104, and step S2105 are optional, and in different embodiments, one or more of these steps may be omitted or replaced.

In some embodiments, step S2101 is optional, and in different embodiments, one or more of these steps may be omitted or replaced.

In some embodiments, step S2102 is optional, and in different embodiments, one or more of these steps may be omitted or replaced.

In some embodiments, step S2103 is optional, and in different embodiments, one or more of these steps may be omitted or replaced.

In some embodiments, step S2104 is optional, and in different embodiments, one or more of these steps may be omitted or replaced.

In some embodiments, step S2105 is optional, and in different embodiments, one or more of these steps may be omitted or replaced.

In some embodiments, reference may be made to other optional implementations described before or after the description corresponding to FIG. 2.

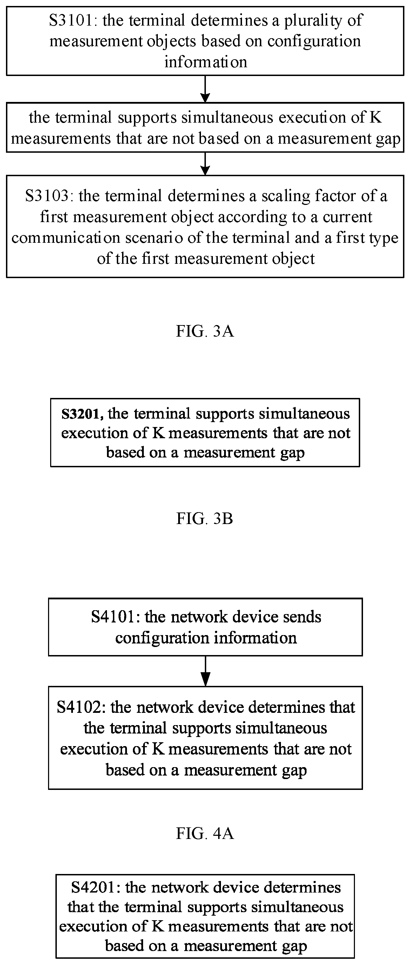

FIG. 3A is a flowchart of a communication method shown according to embodiments of the present disclosure, applied to a terminal. As shown in FIG. 3A, the embodiments of the present disclosure relate to a communication method, and the method includes:
Step S3101, the terminal determines a plurality of measurement objects based on configuration information.

Optional implementations of step S3101 may refer to the optional implementations of step S2102 in FIG. 2 and other related parts in the embodiments involved in FIG. 2, and details are not repeated herein.

Step S3102, the terminal supports simultaneous execution of K measurements that are not based on a measurement gap.

Optional implementations of step S3102 may refer to the optional implementations of step S2103 in FIG. 2 and other related parts in the embodiments involved in FIG. 2, and details are not repeated herein.

Step S3103, the terminal determines a scaling factor of a first measurement object according to a communication scenario where the terminal is currently located and a first type of the first measurement object.

Optional implementations of step S3103 may refer to the optional implementations of step S2105 in FIG. 2 and other related parts in the embodiments involved in FIG. 2, and details are not repeated herein.

The communication method involved in the embodiments of the present disclosure may include at least one of steps S3101 to S3103, For example, step S3101 may be implemented as an independent embodiment, step S3102 may be implemented as an independent embodiment, and step S3103 may be implemented as an independent embodiment, but is not limited thereto.

In some embodiments, step S3101 and step S3102 are optional, step S3101 and step S3103 are optional, step S3102 and step S3103 are optional, step S3101 is optional, step S3102 is optional, and step S3103 is optional, and in different embodiments, one or more of these steps may be omitted or replaced. But is not limited thereto.

FIG. 3B is a flowchart of a communication method shown according to embodiments of the present disclosure, applied to a terminal. As shown in FIG. 3B, the embodiments of the present disclosure relate to a communication method, and the method includes:
Step S3201, the terminal supports simultaneous execution of K measurements that are not based on a measurement gap.

Optional implementations of step S3201 may refer to step S2103 in FIG. 2, step S3102 in FIG. 3A, and other related parts in the embodiments involved in FIG. 2 and FIG. 3A, and details are not repeated herein.

FIG. 4A is a flowchart of a communication method shown according to embodiments of the present disclosure, applied to a network device. As shown in FIG. 4A, the embodiments of the present disclosure relate to a communication method, and the method includes:
Step S4101, the network device sends configuration information.

Optional implementations of step S4101 may refer to step S2101 in FIG. 2 and other related parts in the embodiments involved in FIG. 2, and details are not repeated herein.

In some embodiments, the terminal receives the configuration information sent by the network device, but is not limited thereto, and may also receive configuration information sent by another entity.

In some embodiments, the terminal obtains configuration information specified by a protocol.

In some embodiments, the terminal obtains configuration information from a higer layer.

In some embodiments, the terminal performs processing so as to obtain configuration information.

In some embodiments, step S4101 is omitted, and the terminal autonomously implements the functions indicated by the configuration information, or the above functions are default or preset.

Step S4102, the network device determines that the terminal supports simultaneous execution of K measurements that are not based on a measurement gap.

Optional implementations of step S4102 may refer to step S2104 in FIG. 2 and other related parts in the embodiments involved in FIG. 2, and details are not repeated herein.

The communication method involved in the embodiments of the present disclosure may include at least one of steps S4101 to S4102. For example, step S4101 may be implemented as an independent embodiment, and step S4102 may be implemented as an independent embodiment, but is not limited thereto.

In some embodiments, step S4101 is optional, and in different embodiments, one or more of these steps may be omitted or replaced.

In some embodiments, step S4102 is optional, and in different embodiments, one or more of these steps may be omitted or replaced.

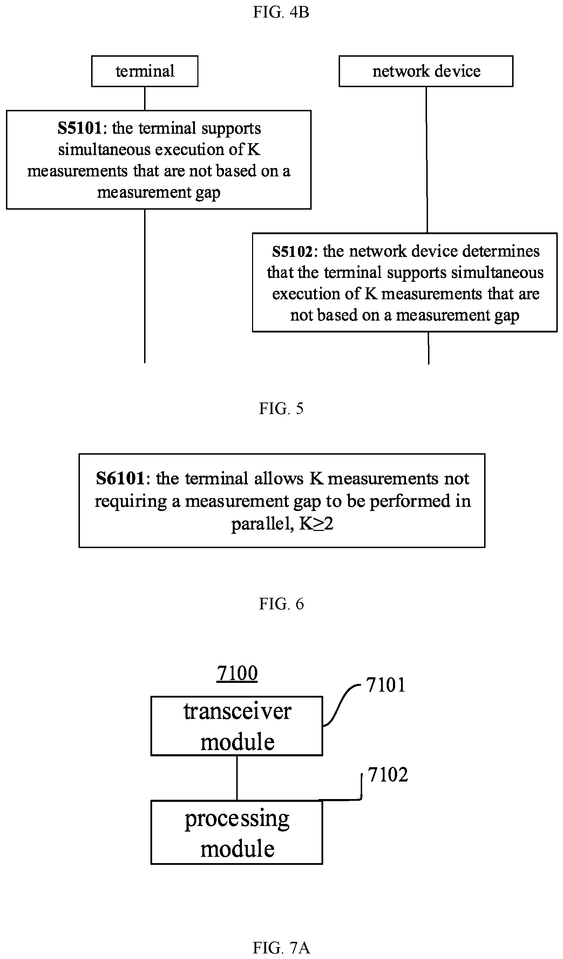

FIG. 4B is a flowchart of a communication method shown according to embodiments of the present disclosure, applied to a network device. As shown in FIG. 4B, the embodiments of the present disclosure relate to a communication method, and the method includes:
Step S4201, the network device determines that the terminal supports simultaneous execution of K measurements that are not based on a measurement gap.

Optional implementations of step S4201 may refer to step S2104 in FIG. 2, step S4102 in FIG. 4A, and other related parts in the embodiments involved in FIG. 2 and FIG. 4, and details are not repeated herein.

FIG. 5 is a flowchart of a communication method shown according to embodiments of the present disclosure. As shown in FIG. 5, the embodiments of the present disclosure relate to a communication method, and the method includes:
Step S5101: the terminal supports simultaneous execution of K measurements that are not based on a measurement gap.
Step S5102: the network device determines that the terminal supports simultaneous execution of K measurements that are not based on a measurement gap.

Optional implementations of step S5101 may refer to step S2103 in FIG. 2, step S3103 in FIG. 3A, and other related parts in the embodiments involved in FIG. 2 and FIG. 3A, and details are not repeated herein.

Optional implementations of step S5102 may refer to step S2104 in FIG. 2, step S4102 in FIG. 4A, and other related parts in the embodiments involved in FIG. 2 and FIG. 4A, and details are not repeated herein.

In some embodiments, the above method may include the methods of the embodiments on the communication system side, the terminal side, and the network device side described above, and details are not repeated herein.

FIG. 6 is a flowchart of a communication method shown according to embodiments of the present disclosure. As shown in FIG. 6, the embodiments of the present disclosure relate to a communication method, and the method includes:
Step S6101, the terminal allows parallel execution of K measurements that do not require a measurement gap, where K ≥ 2.

In some embodiments, there are K searchers in the terminal.

In some embodiments, there are the following six types of measurements that do not require the measurement gap (at least one of the following measurement types exists according to network configuration):
① FR1 PCC or FR2 PCC (if present)
② FR1 PSCC or FR2 PSCC (if present)
③ FR2 SCC requiring neighbor cell measurement (if present, depending on whether there is a PCC/PSCC performing measurement in the same band)
④ FR2 SCC not requiring neighbor cell measurement and/or FR1 SCC
⑤ Inter-frequency MO not requiring MG
⑥ Inter-system MO not requiring MG

Based on the value of K supported by UE capability and according to network measurement configuration, the value of CSSFoutside_gap,i is calculated.

Searchers are allocated according to priorities of the measurement objects. The first-priority measurement exclusively uses one searcher. According to UE capability, if the number of searchers is greater than one, the second-priority measurement preferentially uses one of the remaining searchers, and so on. When only one searcher remains, the remaining priority measurements share the remaining one searcher.

As Embodiment 1: in a scenario where K = 2, the innovation point of this embodiment compared with the existing protocol lies in that inter-system measurement types not requiring MG share searcher #2, that is, measurements ④, ⑤, and ⑥ have the same priority.

In some embodiments, for the case of the CSSF_{outside_gap,i} scaling factor for EN-DC mode, reference may be made to Table 5.

In some embodiments, for the case of the CSSF_{outside_gap,i} scaling factor for SA mode, reference may be made to Table 6.

In some embodiments, for the case of the CSSF_{outside_gap,i} scaling factor for NR-DC mode, reference may be made to Table 7.

In some embodiments, for the case of the CSSF_{outside_gap,i} scaling factor for NE-DC mode, reference may be made to Table 8.

As Embodiment 2: a scenario where K > 2.

Description: a coefficient P is introduced to control priority.
- For example, in an EN-DC with FR1 only CA (only an FR1 NR serving cell) scenario: one searcher is dedicated to FR1 PSCC, and the remaining (K-1) searchers are used for measurements of FR1 SCC, inter-frequency MOs not requiring MG, and inter-system MOs not requiring MG.

As a specific embodiment, if K = 3, the remaining two searchers are used for measurements of FR1 SCC, inter-frequency MOs not requiring MG, and inter-system MOs not requiring MG. By setting, for example, P1 = 50% (or 0.5 or 1/2), and P2 = P3 = 25% (or 0.25 or 1/4), that is, FR1 PSCC has the highest priority and exclusively occupies one searcher, FR1 SCC has the second highest priority and exclusively occupies one searcher, and measurements of inter-frequency MOs not requiring MG and inter-system MOs not requiring MG have the same priority and share the remaining searcher.
- For another example, in an FR1 + FR2 NR-DC (FR1 PCell and FR2 PSCell) scenario: one searcher is dedicated to FR1 PCC, and the remaining (K-1) searchers are used for measurements of FR1 SCC, FR2 PSCC, FR2 SCC not requiring neighbor cell measurement, inter-frequency MOs not requiring MG, and inter-system MOs not requiring MG; P1 + P2 + P3 + P4 = 1.

As a specific embodiment, if K = 3, the remaining two searchers are used for measurements of FR1 SCC, FR2 PSCC, FR2 SCC not requiring neighbor cell measurement, inter-frequency MOs not requiring MG, and inter-system MOs not requiring MG. By setting, for example, P1 = 1, and P2 = P3 = P4 = P5 = 25% (or 0.25 or 1/4), (or P1' = 1/2, and P2' = P3' = P4' = P5' = 1/8), that is, FR1 PCC has the highest priority and exclusively occupies one searcher, FR2 PSCC has the second highest priority and exclusively occupies one searcher, and measurements of FR2 SCC not requiring neighbor cell measurement, inter-frequency MOs not requiring MG, and inter-system MOs not requiring MG have the same priority and share the remaining searcher.

As a specific embodiment, if K = 4, the remaining three searchers are used for measurements of FR1 SCC, FR2 PSCC, FR2 SCC not requiring neighbor cell measurement, inter-frequency MOs not requiring MG, and inter-system MOs not requiring MG. By setting, for example, P1 = 3/2, and P2 = P3 = P4 = P5 = 3/8, (or P1' = 1/3, and P2' = P3' = P4' = P5' = 1/6), that is, FR1 PSCC has the highest priority and exclusively occupies one searcher, FR1 SCC has the second highest priority and exclusively occupies one searcher, and measurements of inter-frequency MOs not requiring MG and inter-system MOs not requiring MG have the same priority and share the remaining searcher.

Note: the value of P may be specified by the protocol, that is, the protocol may directly use fixed values without explicitly indicating the parameter P.

In some embodiments, for the case of the CSSF_{outside_gap,i} scaling factor for EN-DC mode, reference may be made to Table 1.

In some embodiments, for the case of the CSSF_{outside_gap,i} scaling factor for SA mode, reference may be made to Table 2.

In some embodiments, for the case of the CSSF_{outside_gap,i} scaling factor for NE-DC mode, reference may be made to Table 3.

In some embodiments, for the case of the CSSF_{outside_gap,i} scaling factor for NR-DC mode, reference may be made to Table 4.

In the embodiments of the present disclosure, some or all steps and their optional implementations may be arbitrarily combined with some or all steps in other embodiments, and may also be arbitrarily combined with optional implementations of other embodiments.

The embodiments of the present disclosure further provide an apparatus for implementing any of the foregoing methods. For example, an apparatus is provided, which includes units or modules for implementing the respective steps executed by the terminal in any of the foregoing methods. As another example, another apparatus is further provided, which includes units or modules for implementing the respective steps executed by a network device (for example, an access network device, a core network functional node, a core network device, etc.) in any of the foregoing methods.

It should be understood that the division of the units or modules in the above apparatus is merely a logical functional division, and in actual implementation, all or part of the units or modules may be integrated into one physical entity, or may be physically separated. In addition, the units or modules in the apparatus may be implemented in the form of a processor invoking software. For example, the apparatus includes a processor, the processor is connected to a memory, and the memory stores instructions; the processor invokes the instructions stored in the memory to implement any of the foregoing methods or to implement the functions of the respective units or modules of the apparatus, where the processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits, and part or all of the functions of the units or modules may be implemented through the design of hardware circuits, where the hardware circuits may be understood as one or more processors. For example, in one implementation, the hardware circuits are application-specific integrated circuits (ASICs), and by designing the logical relationships of components in the circuits, part or all of the functions of the units or modules described above are implemented. As another example, in another implementation, the hardware circuits are implemented by programmable logic devices (PLD), and taking a field programmable gate array (FPGA) as an example, it may include a large number of logic gate circuits, and by configuring the connection relationships among the logic gate circuits through a configuration file, part or all of the functions of the units or modules described above are implemented. All units or modules of the above apparatus may be implemented entirely in the form of a processor invoking software, or entirely in the form of hardware circuits, or partly in the form of a processor invoking software and the remaining part in the form of hardware circuits.

In the embodiments of the present disclosure, a processor is a circuit having signal processing capability. In one implementation, the processor may be a circuit having instruction reading and execution capability, such as a central processing unit (CPU), a microprocessor, a graphics processing unit (GPU) (which may be understood as a microprocessor), or a digital signal processor (DSP), and the like. In another implementation, the processor may implement certain functions through the logical relationships of hardware circuits, and the logical relationships of the hardware circuits are fixed or reconfigurable. For example, the processor is a hardware circuit implemented by an application-specific integrated circuit (ASIC) or a programmable logic device (PLD), such as an FPGA. In reconfigurable hardware circuits, the process in which the processor loads a configuration document to implement configuration of the hardware circuits may be understood as a process in which the processor loads instructions to implement part or all of the functions of the units or modules described above. In addition, there may further be hardware circuits designed for artificial intelligence, which may be understood as ASICs, such as a Neural Network Processing Unit (NPU), a Tensor Processing Unit (TPU), and a Deep Learning Processing Unit (DPU), and the like.

FIG. 7A is a schematic structural diagram of a terminal proposed in embodiments of the present disclosure. As shown in FIG. 7A, the terminal 7100 may include at least one of a transceiver module 7101, a processing module 7102, and the like. In some embodiments, the processing module 7102 is configured to support simultaneous execution of K measurements that are not based on a measurement gap (MG), where each measurement includes measurement of at least one type of measurement object, and K is an integer not less than 2. Optionally, the transceiver module is configured to perform at least one of the communication steps such as sending and/or receiving performed by the terminal 7100 in any of the foregoing methods, which will not be repeated herein. Optionally, the processing module is configured to perform at least one of the other steps performed by the terminal 7100 in any of the foregoing methods, which will not be repeated herein.

Optionally, the processing module 7102 is configured to perform at least one of the processing and other communication steps performed by the terminal in any of the foregoing methods, which will not be repeated herein.

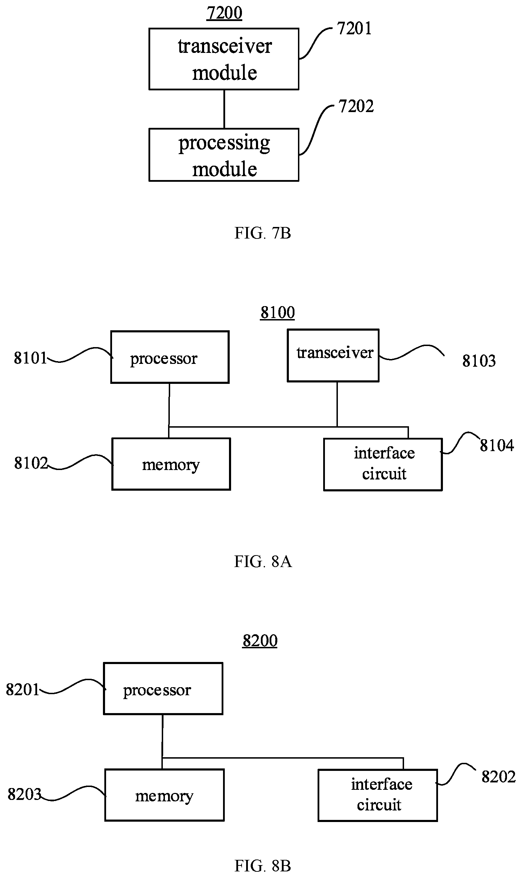

FIG. 7B is a schematic structural diagram of a network device proposed in embodiments of the present disclosure. As shown in FIG. 7B, the network device 7200 may include at least one of a transceiver module 7201, a processing module 7202, and the like. In some embodiments, the processing module 7201 is configured to determine that the terminal supports simultaneous execution of K measurements that are not based on a measurement gap (MG), where each measurement includes measurement of at least one type of measurement object, and K is an integer not less than 2. Optionally, the transceiver module is configured to perform at least one of the communication steps such as sending and/or receiving performed by the network device 102 in any of the foregoing methods (for example, step S2101, but not limited thereto), which will not be repeated herein.

Optionally, the processing module 7202 is configured to perform at least one of the processing and other communication steps performed by the network device in any of the foregoing methods, which will not be repeated herein.

In some embodiments, the transceiver module may include a sending module and/or a receiving module, and the sending module and the receiving module may be separate or may be integrated. Optionally, the transceiver module may be interchangeable with a transceiver.

In some embodiments, the processing module may be one module or may include a plurality of sub-modules. Optionally, the plurality of sub-modules respectively perform all or part of the steps required to be performed by the processing module. Optionally, the processing module may be interchangeable with the processor.

FIG. 8A is a schematic structural diagram of a communication device 8100 proposed in embodiments of the present disclosure. The communication device 8100 may be a network device (for example, an access network device, a core network device, and the like), or may be a terminal (for example, a user equipment and the like), or may be a chip, a chip system, or a processor that supports a network device in implementing any of the foregoing methods, or may be a chip, a chip system, or a processor that supports a terminal in implementing any of the foregoing methods. The communication device 8100 may be used to implement the methods described in the foregoing method embodiments, and reference may be made to the descriptions in the foregoing method embodiments for details.

As shown in FIG. 8A, the communication device 8100 includes one or more processors 8101. The processor 8101 may be a general-purpose processor or a dedicated processor, for example, may be a baseband processor or a central processing unit. The baseband processor may be used to process communication protocols and communication data, and the central processing unit may be used to control a communication apparatus (for example, a base station, a baseband chip, a terminal device, a terminal device chip, a DU, or a CU, etc.), execute programs, and process data of the programs. The communication device 8100 is configured to perform any of the foregoing methods.

In some embodiments, the communication device 8100 further includes one or more memories 8102 for storing instructions. Optionally, all or part of the memory 8102 may also be located outside the communication device 8100.

In some embodiments, the communication device 8100 further includes one or more transceivers 8103. When the communication device 8100 includes one or more transceivers 8103, the transceiver 8103 performs at least one of the communication steps such as sending and/or receiving in the foregoing methods (for example, steps S2101, S2102, S2103, and S2104, but not limited thereto).

In some embodiments, the transceiver may include a receiver and/or a transmitter, and the receiver and the transmitter may be separate or may be integrated. Optionally, the terms "transceiver", "transceiver unit", "transceiver", and "transceiver circuit" may be interchangeable, the terms "transmitter", "transmission unit", "transmitting machine", and "transmission circuit" may be interchangeable, and the terms "receiver", "reception unit", "receiving machine", and "reception circuit" may be interchangeable.

In some embodiments, the communication device 8100 may include one or more interface circuits 8104. Optionally, the interface circuit 8104 is connected to the memory 8102, and the interface circuit 8104 may be used to receive signals from the memory 8102 or other devices, and may be used to send signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 is not limited by FIG. 8A. The communication device may be an independent device or may be a part of a larger device. For example, the communication device may be: (1) a standalone integrated circuit (IC), or a chip, or a chip system or subsystem; (2) a set including one or more ICs, and optionally, the set of ICs may further include a storage component for storing data and programs; (3) an ASIC, such as a modem (Modem); (4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, and the like; (6) others, and the like.

FIG. 8B is a schematic structural diagram of a chip 8200 proposed in embodiments of the present disclosure. For a case where the communication device 8100 is a chip or a chip system, reference may be made to the schematic structural diagram of the chip 8200 shown in FIG. 8B, but is not limited thereto.

The chip 8200 includes one or more processors 8201, and the chip 8200 is configured to perform any of the foregoing methods.

In some embodiments, the chip 8200 further includes one or more interface circuits 8202. Optionally, the interface circuit 8202 is connected to a memory 8203, and the interface circuit 8202 may be used to receive signals from the memory 8203 or other devices, and the interface circuit 8202 may be used to send signals to the memory 8203 or other devices. For example, the interface circuit 8202 may read instructions stored in the memory 8203 and send the instructions to the processor 8201.

In some embodiments, the interface circuit 8202 performs at least one of communication steps such as sending and/or receiving in the foregoing methods, and the processor 8201 performs at least one of other steps.

In some embodiments, the terms "interface circuit", "interface", "transmit/receive pin", and "transceiver" may be interchangeable.

In some embodiments, the chip 8200 further includes one or more memories 8203 for storing instructions. Optionally, all or part of the memory 8203 may be located outside the chip 8200.

The present disclosure further provides a storage medium, on which instructions are stored, and when the instructions are executed on the communication device 8100, the communication device 8100 is caused to perform any of the foregoing methods. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The present disclosure further provides a program product, and when the program product is executed by the communication device 8100, the communication device 8100 is caused to perform any of the foregoing methods. Optionally, the program product is a computer program product.

The present disclosure further provides a computer program, and when the computer program is executed on a computer, the computer is caused to perform any of the foregoing methods.

## Claims

1. A communication method, comprising:
supporting, by a terminal, simultaneous execution of K measurements that are not based on a measurement gap MG, wherein each measurement comprises measurement of at least one type of a measurement object, where K is an integer no less than 2.

2. The method according to claim 1, wherein the type of the measurement object comprises at least one of:
a Primary Carrier Component PCC of Frequency Range FR1;
a PCC of Frequency Range FR2;
a Primary Secondary Carrier Component PSCC of FR1;
a PSCC of FR2;
a FR2 Secondary Carrier Component SCC requiring neighbor cell measurement;
a FR1 SCC;
a FR2 SCC without requiring neighbor cell measurement;
an Inter-frequency Measurement Object MO without requiring the MG; or
an Inter-system MO without requiring the MG.

3. The method according to claim 1 or 2, further comprising:
determining, according to a communication scenario where the terminal is currently located and a first type of a first measurement object, a scaling factor of the first measurement object, wherein the scaling factor is configured to determine a delay of measurement for the first measurement object; wherein the first measurement object is one or more of a plurality of measurement objects configured by a network device for the terminal.

4. The method according to claim 3, wherein determining the scaling factor of the first measurement object according to the communication scenario where the terminal is currently located and the first type of the first measurement object comprises:
determining, according to the communication scenario where the terminal is currently located and a priority of the first type, the scaling factor of the first measurement object.

5. The method according to claim 4, wherein determining the scaling factor of the first measurement object according to the communication scenario where the terminal is currently located and the first type of the first measurement object comprises:
when the priority of the first type is higher than a priority of a second type, determining the scaling factor of the first measurement object as 1;
when the priority of the first type is lower than the priority of the second type, determining the scaling factor of the first measurement object according to a number of measurement objects of each second type;
where the second type is a type of another measurement object, other than the measurement object of the first type, configured by the network device for the terminal in the communication scenario currently located.

6. The method according to claim 3, wherein determining the scaling factor of the first measurement object according to the communication scenario where the terminal is currently located and the first type of the first measurement object comprises:
determining the scaling factor of the first measurement object according to the communication scenario where the terminal is currently located, a priority coefficient of the first type, and K.

7. The method according to claim 6, wherein determining the scaling factor of the first measurement object according to the communication scenario where the terminal is currently located, the priority coefficient of the first type, and K comprises:
when a priority of the first type is higher than a priority of a second type, determining the scaling factor of the first measurement object as 1;
when the priority of the first type is lower than the priority of the second type, determining the scaling factor of the first measurement object according to a number of measurement objects of each second type, the priority coefficient of the first type, and K;
where the second type is another measurement object, other than the measurement object of the first type, configured by the network device for the terminal in the communication scenario currently located.

8. The method according to claim 6, wherein the second type corresponds to one or a plurality of priority coefficients.

9. The method according to any of claims 3 to 8, wherein the communication scenario comprises at least one of:
a LTE and 5G Dual Connectivity EN-DC scenario;
a Standalone SA scenario;
a New Radio-Dual Connectivity NR-DC scenario; or
a 5G and LTE-Dual Connectivity NE-DC scenario.

10. The method according to claim 9, wherein the EN-DC scenario comprises at least one of:
an ENDC scenario with only FR1 Carrier Aggregation CA;
an ENDC scenario with only FR2 intra-band CA;
an ENDC scenario with only FR2 inter-band CA;
an ENDC scenario with FR1 and FR2 CA, and a PSCell in FR1; or
an ENDC scenario with FR1 and FR2 CA, and a PSCell in FR2.

11. The method according to claim 9, wherein the SA scenario comprises at least one of:
an SA scenario with only FR1 CA;
an SA scenario with only FR2 intra-band CA;
an SA scenario with only FR2 inter-band CA;
an SA scenario with FR1 and FR2 CA, and a PCell in FR1; or
an SA scenario with FR1 and FR2 CA, and a PCell in FR2.

12. The method according to claim 9, wherein the NR-DC scenario comprises:
an NR-DC scenario with a PCell in FR1 and a PSCell in FR2.

13. The method according to claim 9, wherein the NE-DC scenario comprises at least one of:
NE-DC with only FR1 CA;
NE-DC with only FR2 intra-band CA;
NE-DC with only FR2 inter-band CA; or
NE-DC with FR1 and FR2 CA, and a PCell in FR1.

14. The method according to any of claims 1 to 13, wherein the K measurements that are not based on the measurement gap are used for layer 3 mobility management or layer 1 mobility management.

15. A communication method, comprising:
determining that a terminal supports simultaneous execution of K measurements that are not based on a measurement gap MG, wherein each measurement comprises measurement of at least one type of a measurement object, where K is an integer no less than 2.

16. The method according to claim 15, wherein the type of the measurement object comprises at least one of:
a PCC of FR1;
a PCC of FR2;
a PSCC of FR1;
a PSCC of FR2;
a FR2 SCC requiring neighbor cell measurement;
a FR1 SCC;
a FR2 SCC without requiring neighbor cell measurement;
an Inter-frequency MO without requiring the MG; or
an Inter-system MO without requiring the MG.

17. The method according to claim 15 or 16, wherein a scaling factor of a first measurement object is determined according to a communication scenario where the terminal is currently located and a first type of the first measurement object, wherein the scaling factor is configured to determine a delay of measurement for the first measurement object; wherein the first measurement object is one or more of a plurality of measurement objects configured by a network device for the terminal.

18. The method according to claim 17, wherein the scaling factor of the first measurement object is determined according to the communication scenario where the terminal is currently located and a priority of the first type.

19. The method according to claim 18, wherein
when the priority of the first type is higher than a priority of a second type, the scaling factor of the first measurement object is 1;
when the priority of the first type is lower than the priority of the second type, the scaling factor of the first measurement object is determined according to a number of measurement objects of each second type;
where the second type is a type of another measurement object, other than the measurement object of the first type, configured by the network device for the terminal in the communication scenario currently located.

20. The method according to claim 17, wherein the scaling factor of the first measurement object is determined according to the communication scenario where the terminal is currently located, a priority coefficient of the first type, and K.

21. The method according to claim 20, wherein when a priority of the first type is higher than a priority of a second type, the scaling factor of the first measurement object is 1;
when the priority of the first type is lower than the priority of the second type, the scaling factor of the first measurement object is determined according to a number of measurement objects of each second type, the priority coefficient of the first type, and K;
where the second type is another measurement object, other than the measurement object of the first type, configured by the network device for the terminal in the communication scenario currently located.

22. The method according to claim 20, wherein the second type corresponds to one or a plurality of priority coefficients.

23. The method according to any of claims 17 to 22, wherein the communication scenario comprises at least one of:
an EN-DC scenario;
an SA scenario;
an NR-DC scenario; or
an NE-DC scenario.

24. The method according to claim 23, wherein the EN-DC scenario comprises at least one of:
an ENDC scenario with only FR1 CA;
an ENDC scenario with only FR2 intra-band CA;
an ENDC scenario with only FR2 inter-band CA;
an ENDC scenario with FR1 and FR2 CA, and a PSCell in FR1; or
an ENDC scenario with FR1 and FR2 CA, and a PSCell in FR2.

25. The method according to claim 23, wherein the SA scenario comprises at least one of:
an SA scenario with only FR1 CA;
an SA scenario with only FR2 intra-band CA;
an SA scenario with only FR2 inter-band CA;
an SA scenario with FR1 and FR2 CA, and a PCell in FR1; or
an SA scenario with FR1 and FR2 CA, and a PCell in FR2.

26. The method according to claim 23, wherein the NR-DC scenario comprises:
an NR-DC scenario with a PCell in FR1 and a PSCell in FR2.

27. The method according to claim 23, wherein the NE-DC scenario comprises at least one of:
NE-DC with only FR1 CA;
NE-DC with only FR2 intra-band CA;
NE-DC with only FR2 inter-band CA; or
NE-DC with FR1 and FR2 CA, and a PCell in FR1.

28. The method according to any of claims 15 to 27, wherein the K measurements that are not based on the measurement gap are used for layer 3 mobility management or layer 1 mobility management.

29. A communication method, comprising:
supporting, by a terminal, simultaneous execution of K measurements that are not based on a measurement gap MG, wherein each measurement comprises measurement of at least one type of a measurement object, where K is an integer no less than 2; and
determining, by a network device, that the terminal supports the simultaneous execution of the K measurements that are not based on the measurement gap MG.

30. A terminal, comprising:
a processing module, configured to support simultaneous execution of K measurements that are not based on a measurement gap MG, each measurement comprising measurement of at least one type of a measurement object, where K is an integer no less than 2.

31. A network device, comprising:
a processing module, configured to determine that a terminal supports simultaneous execution of K measurements that are not based on a measurement gap MG, each measurement comprising measurement of at least one type of a measurement object, where K is an integer no less than 2.

32. A terminal, comprising:
one or a plurality of processors;
wherein the terminal is configured to execute the communication method according to any of claims 1 to 14.

33. A network device, comprising:
one or a plurality of processors;
wherein the terminal is configured to execute the communication method according to any of claims 15 to 28.

34. A communication system, comprising: a terminal and a network device, wherein the terminal is configured to implement the communication method according to any of claims 1 to 14, and the network device is configured to implement the communication method according to any of claims 15 to 28.

35. A storage medium having instructions stored therein, and when the instructions are executed on a communication device, the communication device executes the communication method according to any of claims 1 to 14, or executes the communication method according to any of claims 15 to 28.
